(19) Europäisches Patentamt
European Patent Office
Office européen des brevets

(11) Veröffentlichungsnummer: **0 462 389 B1**

# (12) EUROPÄISCHE PATENTSCHRIFT

(45) Veröffentlichungstag der Patentschrift: **24.08.94**

(51) Int. Cl.5: **C08G 77/18**, C08G 77/46, C08L 83/06, C08L 83/12, C09D 183/06, C09D 183/12, C08G 77/38

(21) Anmeldenummer: **91107347.6**

(22) Anmeldetag: **07.05.91**

## (54) Härtbare Organopolysiloxane mit über SiOC-Gruppen gebundenen Oxyalkylenethergruppen, ihre Herstellung und Verwendung.

(30) Priorität: **21.06.90 DE 4019711**

(43) Veröffentlichungstag der Anmeldung:
**27.12.91 Patentblatt 91/52**

(45) Bekanntmachung des Hinweises auf die Patenterteilung:
**24.08.94 Patentblatt 94/34**

(84) Benannte Vertragsstaaten:
**BE DE FR GB IT NL**

(56) Entgegenhaltungen:
**EP-A- 0 018 624**
**EP-A- 0 284 863**
**EP-A- 0 329 279**
**US-A- 4 906 718**

(73) Patentinhaber: **Th. Goldschmidt AG**
**Goldschmidtstrasse 100**
**D-45127 Essen (DE)**

(72) Erfinder: **Weitemeyer, Christian, Dr.**
**Sundernholz 67**
**W-4300 Essen 1 (DE)**
Erfinder: **Döhler, Hardi**
**Klapperstrasse 19**
**W-4300 Essen 14 (DE)**

EP 0 462 389 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft härtbare Polysiloxane mit über SiOC-Gruppen gebundenen Oxyalkylenethergruppen. Die Erfindung betrifft insbesondere härtbare Polysiloxane mit über SiOC-Gruppen gebundenen Oxyalkylenvinylethergruppen, wobei die Vinylgruppen durch Alkylreste substituiert sein können. Die Erfindung betrifft ferner ein Verfahren zur Herstellung dieser Verbindungen und deren Verwendung als vorzugsweise photochemisch härtbare Polysiloxane in Vergußmassen, als abhäsive Beschichtungsmittel für flächige Träger oder als modifizierende Additive in radikalisch, kationisch oder durch UV- oder Elektronenstrahlen härtbare Verbindungen.

Neben den bei UV-Einwirkung härtenden radikalisch polymerisierenden Systemen sind in den letzten Jahren kationisch härtbare, Epoxy- oder Vinyletherverbindungen enthaltende Systeme entwickelt worden, bei denen die Härtung insbesondere durch Diaryliodonium- und Triarylsulfoniumsalze initiiert wird. Der Vorteil der kationisch härtenden Systeme liegt in der Unempfindlichkeit der Härtungsreaktion gegen Luftsauerstoff, der raschen Filmhärtung und der Umweltfreundlichkeit dieser Systeme.

Kationisch härtende Systeme auf Basis epoxyfunktioneller Organopolysiloxane sind in zahlreichen Patentschriften beschrieben, von denen die US-PS 4 421 904 als Beispiel genannt wird. Eine zusammenfassende Darstellung kann der Zeitschrift Adhesives Age, 1989, 24 - 27, entnommen werden. In dieser Veröffentlichung sind handelsübliche Epoxygruppen enthaltende Siloxane zur Abhäsivbeschichtung von flächigen Trägern beschrieben.

Zur kationischen Polymerisation von - gegebenenfalls substituierten - Vinylethergruppen enthaltenden Verbindungen sind Katalysatoren mit geringer Säurestärke ausreichend. Anders als bei den Epcxidgruppen enthaltenden Verbindungen können deshalb neben den üblichen salzartigen Diaryliodonium- und Triarylsulfoniumverbindungen auch nicht-salzartige Verbindungen, wie z.B. Ketosulfone, als Photoinitiatoren verwendet werden.

Kationisch härtbare, Vinylethergruppen enthaltende Organopolysiloxane sind in der US-PS 4 617 238 beschrieben. In dieser Patentschrift ist ein Verfahren beschrieben, bei dem die Vinylethergruppe in das Organopolysiloxan durch Anlagerung (Hydrosilylierung) von Verbindungen mit einer Allyl- und einer Vinylethergruppe an eine SiH-Gruppe des Organopolysiloxans eingeführt wird. Dabei wird nur die Allylgruppe an die SiH-Gruppe addiert, während die Vinylethergruppe erhalten bleibt. Daraus ergibt sich, daß je SiH-Gruppe nur jeweils eine Vinylethergruppe in das Siloxanmolekül eingebaut werden kann.

Die vorliegende Erfindung löst das technische Problem, Organopolysiloxane bereitzustellen, die eine beliebige Anzahl von - gegebenenfalls substituierten - Vinylethergruppen aufweisen, ohne durch die im Ausgangsprodukt vorliegende Anzahl von SiH-Gruppen eingeschränkt zu sein. Hierdurch wird es möglich, die Härtungs- und Vernetzungseigenschaften in weiten Grenzen zu beeinflussen und zu steuern. Dabei sollen die Verbindungen möglichst einfach herzustellen sein. Bei der Herstellung soll möglichst auf die Verwendung toxischer Reaktionspartner, wie etwa auf den Einsatz von Chlorethylvinylether, verzichtet werden.

Die Forderung der Präsenz variabler Mengen - gegebenenfalls substituierter - Vinylethergruppen wird erfindungsgemäß durch die Verbindungen des Patentanspruchs 1 erfüllt. Ein Gegenstand der Erfindung sind somit härtbare Polysiloxane mit über SiOC-Gruppen gebundenen Oxyalkylenethergruppen der allgemeinen durchschnittlichen Formel

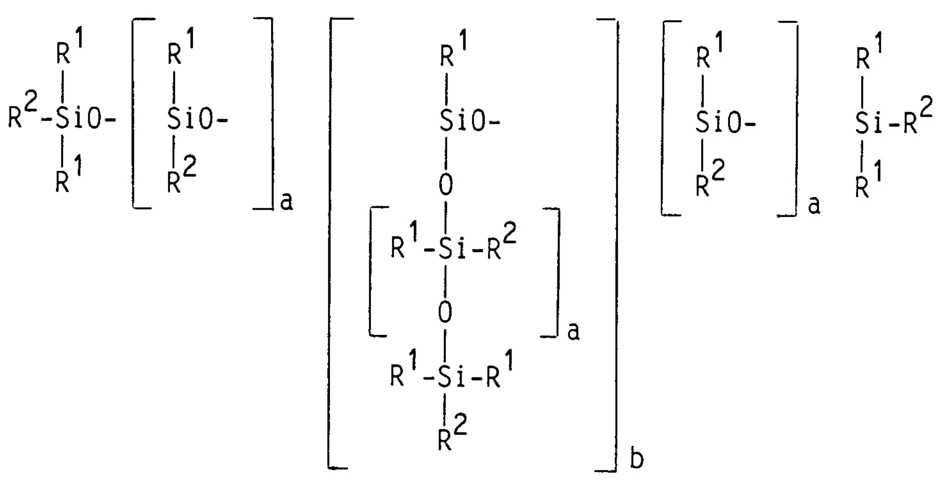

I

wobei die Reste

$R^1$ gleich oder verschieden sind und Alkylreste mit 1 bis 4 Kohlenstoffatomen oder Phenylreste mit der Maßgabe bedeuten, daß mindestens 90 % der Reste $R^1$ Methylreste sind,

$R^2$ gleich oder verschieden sind und Alkylreste mit 1 bis 20 Kohlenstoffatomen, Arylreste, Aralkylreste oder Oxyalkylenetherreste der allgemeinen Formel

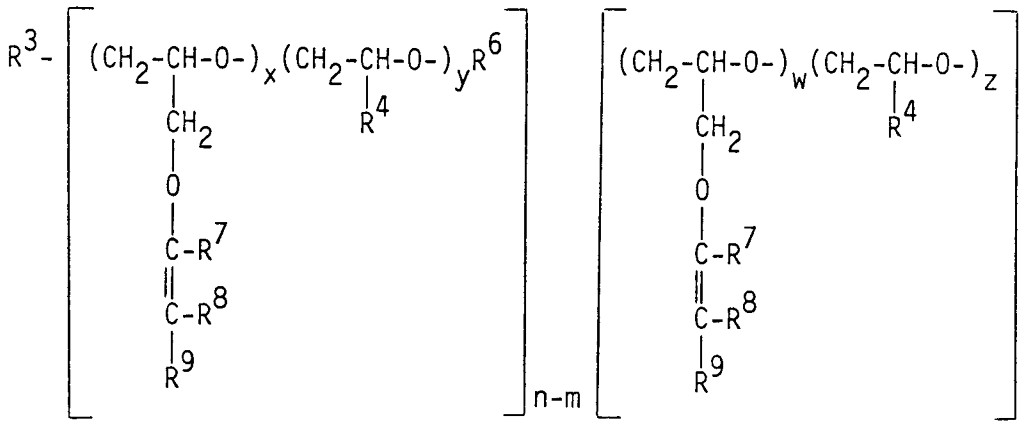

II

bedeuten, in der

$R^3$ ein n-wertiger Rest einer zur Anlagerung von Oxiranen befähigten Verbindung $(R^3)H_n$ mit n aktiven Wasserstoffatomen,

$R^4$ ein Wasserstoff-, Kohlenwasserstoff- oder $R^5OCH_2$-Rest,

$R^5$ ein Kohlenwasserstoff- oder Acylrest ist,

$R^6$ ein Kohlenwasserstoff- oder Acylrest ist,

$R^7$, $R^8$, $R^9$ jeweils Wasserstoff- oder Kohlenwasserstoffreste mit 1 bis 8 Kohlenstoffatomen sind oder wobei $R^7$ und $R^8$ oder $R^8$ und $R^9$ gemeinsam Bestandteil eines cyclischen, nichtaromatischen Kohlenwasserstoffrestes mit 5 oder 6 Kohlenstoffatomen sind,

n eine Zahl von 1 bis 6 ist,

m einen durchschnittlichen Wert von 1 bis 2 hat,

x, y, w, z jeweils einen durchschnittlichen Wert von 0 bis 100 haben, wobei $w + z \geqq 1$ sein muß, mit der Maßgabe, daß im durchschnittlichen Molekül mindestens eine Gruppe

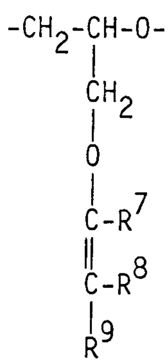

III

vorhanden sein muß,

a einen durchschnittlichen Wert von 1 bis 1000,

b einen durchschnittlichen Wert von 0 bis 10 hat.

Die Reste $R^1$ können im Mclekül gleich oder verschieden sein und sind Alkylreste mit 1 bis 4 Kohlenstoffatomen oder Phenylreste. Die Alkylreste können somit Methyl-, Ethyl-, Propyl- oder Butylreste sein. Es muß jedoch die Bedingung erfüllt sein, daß im durchschnittlichen Molekül wenigstens 90 % der Reste $R^1$ Methylreste sind. Besonders bevorzugt sind Organopolysiloxane, bei denen alle Reste $R^1$ Methylreste sind. Zur Beeinflussung der abhäsiven Eigenschaften kann es jedoch auch von Vorteil sein, wenn bis zu 10 % der Reste $R^1$ Phenylgruppen sind.

Die Reste $R^2$ können wie die Reste $R^1$ im Molekül gleich oder verschieden sein. Sie können Alkylreste mit 1 bis 20 Kohlenstoffatomen, Aryl- oder Aralkylreste oder Oxyalkylenetherreste der allgemeinen Formel II sein, wobei jedoch die Bedingung erfüllt sein muß, daß im durchschnittlichen Organopolysiloxanmolekül mindestens eine Gruppe

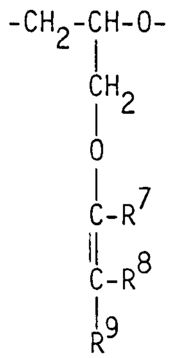

III

vorhanden sein muß.

Bevorzugt sollen im durchschnittlichen Organopolysiloxanmolekül 1 bis 30, insbesondere 2 bis 15 Oxyalkylenetherreste enthalten sein.

Hat ein Rest $R^2$ die Bedeutung eines Alkylrestes mit 1 bis 20 Kohlenstoffatomen, kann er die gleiche Bedeutung wie der Rest $R^1$ annehmen. Er kann jedoch auch mehr als 4 Kohlenstoffatome aufweisen und geradkettig oder verzweigt sein. Beispiele solcher Reste sind der Octyl-, iso-Octyl-, Nonyl-, Decyl-, Dodecyl- und der Hexadecylrest. Die Alkylreste können substituiert sein.

Hat $R^2$ die Bedeutung eines Arylrestes, ist der Phenylrest besonders bevorzugt. Weitere Beispiele für Arylreste sind der Tolyl- und der Xylylrest.

Als Aralkylreste sind Phenylethyl- und 2-Phenylpropylreste bevorzugt.

Das erfindungsgemäße härtbare Organopolysiloxan in besonderem Maße kennzeichnend sind die Oxyalkylenetherreste der allgemeinen Formel

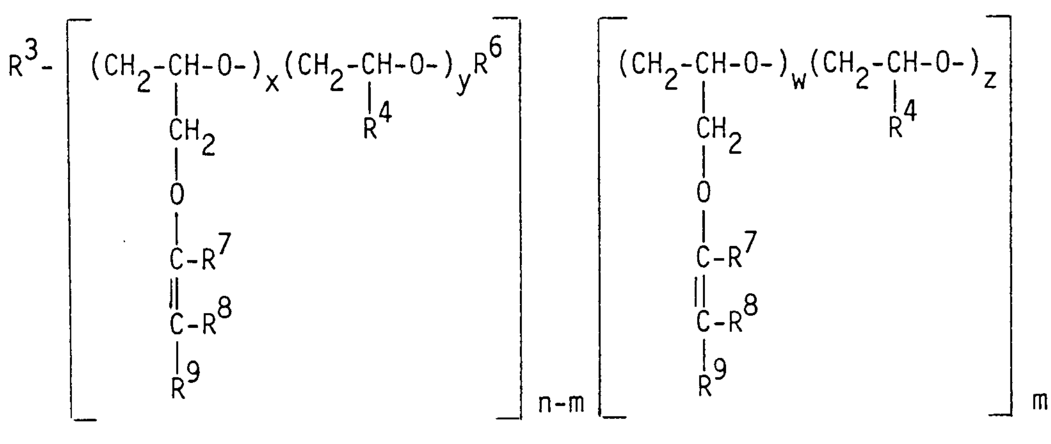

II

$R^3$ ist als n-wertiger Rest einer zur Anlagerung von Oxiranen befähigten Verbindung $(R^3)H_n$ mit n aktiven Wasserstoffatomen definiert. Bei diesen Verbindungen $(R^3)H_n$ handelt es sich bevorzugt um Wasser, Ammoniak, ein- oder mehrwertige Alkohole, ein- oder mehrwertige Phenole, ein- oder mehrwertige Carbonsäuren, Hydroxycarbonsäuren und ein- oder mehrwertige Amine.

Als Alkohole sind einwertige gesättigte Alkohole mit 1 bis 13 Kohlenstoffatomen bevorzugt. Beispiele hierfür sind Methanol, Ethanol, Propanol, Hexanol, Decanol und Tridecylalkohol.

Ferner sind bevorzugt einwertige ungesättigte Alkohole mit 3 bis 13 Kohlenstoffatomen, wie Allylalkohol, Methallylalkohol, Oleylalkohol, 5-Hexen-1-ol.

Besonders geeignet sind auch 2- bis 6wertige aliphatische Alkohole mit 2 bis 6 Kohlenstoffatomen, wie Ethylenglykol, Propylenglykol, Glycerin, Pentaerythrit, Sorbit.

Beispiele einer Hydroxycarbonsäure sind Zitronensäure oder Milchsäure.

Als Phenole sind die 1- bis 3wertigen Phenole, insbesondere Phenol und Hydrochinon, geeignet.

Beispiele geeigneter Carbonsäuren sind Essigsäure, Buttersäure, Adipinsäure, Bernsteinsäure und Phthalsäure.

Geeignete Amine sind niedere Alkylamine, wie Methylamin, Ethylamin, Propylendiamin, Ethylendiamin.

Die folgende Tabelle soll die Bedeutung von $R^3$ noch näher erläutern:

| $(R^3)H_n$ | $R^3$- | n |
|---|---|---|
| $CH_2CH_2CH_2OH$ | $CH_2CH_2CH_2O$- | 1 |
| $CH_3CH_2COOH$ | $CH_3CH_2COO$- | 1 |
| 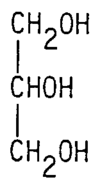 | 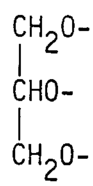 | 3 |
| $HO(CH_2)_pCOOH$ | $-O(CH_2)_pCOO$- | 2 |
| 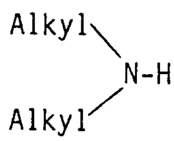 | 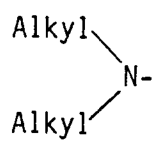 | 1 |

Aus diesen Beispielen ist ersichtlich, daß $R^3$ in weiten Bereichen hinsichtlich seiner Struktur variabel ist.

$R^4$ ist ein Wasserstoff-, Alkyl- oder $R^5OCH_2$-Rest. Auch dieser Rest kann innerhalb des polymeren Moleküls unterschiedliche Bedeutung haben. Als Alkylrest kann $R^4$ insbesondere 1 bis 12 Kohlenstoffatome aufweisen. Vorzugsweise ist $R^4$ ein Wasserstoff-, Methyl-, Ethyl-, $HOCH_2$- oder $CH_3OCH_2$-Rest.

Der Rest $R^5$ ist ein Wasserstoff-, Alkyl- oder Acylrest. Als Alkylrest ist insbesondere ein niederer Alkylrest mit 1 bis 4 Kohlenstoffatomen bevorzugt. Als Acylrest ist ein Rest mit 2 bis 7 Kohlenstoffatomen geeignet. Bevorzugt ist der Acetylrest.

Der Rest $R^6$ ist ein Alkyl- oder Acylrest. Bevorzugt ist $R^6$ ein niederer Alkylrest mit 1 bis 4 Kohlenstoffatomen oder der Acetylrest.

Die Reste $R^7$, $R^8$ und $R^9$ sind Wasserstoff- oder Alkylreste. Dabei können die Reste $R^7$ und $R^8$ bzw. die Reste $R^8$ und $R^9$ jeweils gemeinsam Bestandteil eines cyclischen, nichtaromatischen Kohlenwasserstoffrestes mit 5 oder 6 Kohlenstoffatomen sein. Beispiele sind

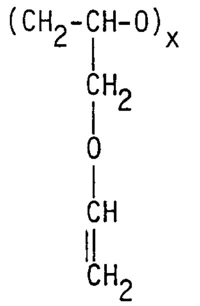

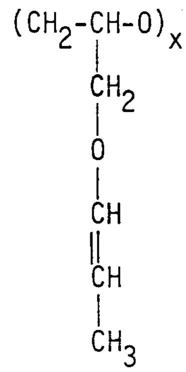

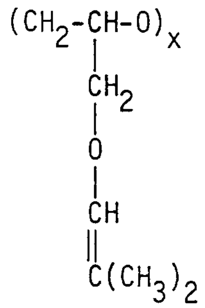

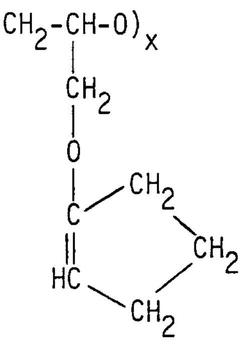

Vorzugsweise ist mindestens einer der Reste $R^7$, $R^8$, $R^9$ ein Alkylrest. Besonders bevorzugt ist der Rest $R^8$ und/oder der Rest $R^9$ ein Alkylrest, vorzugsweise ein Methylrest, und der Rest $R^7$ ein Wasserstoffrest. Ebenfalls bevorzugt sind $R^7$ und $R^8$ gemeinsam Bestandteil eines cyclischen, nichtaromatischen Kohlenwasserstoffrestes mit 5 oder 6 Kohlenstoffatomen, während $R^9$ ein Wasserstoffrest ist.

Sind die Reste $R^8$ und $R^9$ verschieden, besteht die Möglichkeit der Ausbildung cis-, trans-isomerer Verbindungen. Beide Formen sind jedoch im Sinne der Erfindung brauchbar.

Der Index n hat einen Wert von 1 bis 6. m hat einen Wert von 1 bis 2 und ist vorzugsweise = 1. m darf jedoch nicht größer als n sein. Vorzugsweise ist n = m.

x, y, w und z haben jeweils einen durchschnittlichen Wert von 0 bis 100, wobei $w + z \geqq 1$ sein muß. Vorzugsweise haben $x + w$ einen Wert von 1 bis 25, insbesondere einen Wert von 2 bis 4.

Vorzugsweise ist $1 < x + y + w + z < 150$.

Die Indices a und b kennzeichnen die Struktur des Polysiloxans. a definiert die Zahl der difunktionellen Si-Einheiten und hat einen Wert von 1 bis 1000. b gibt die Anzahl der trifunktionellen Einheiten an und hat einen Wert von 0 bis 10. Vorzugsweise hat a einen Wert von 5 bis 200 und b einen Wert von 0 bis 2, wobei der Wert 0 für b besonders bevorzugt ist.

Beispiele für Verbindungen der Formel I sind:

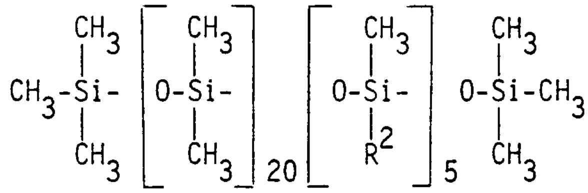

$R^2$ = 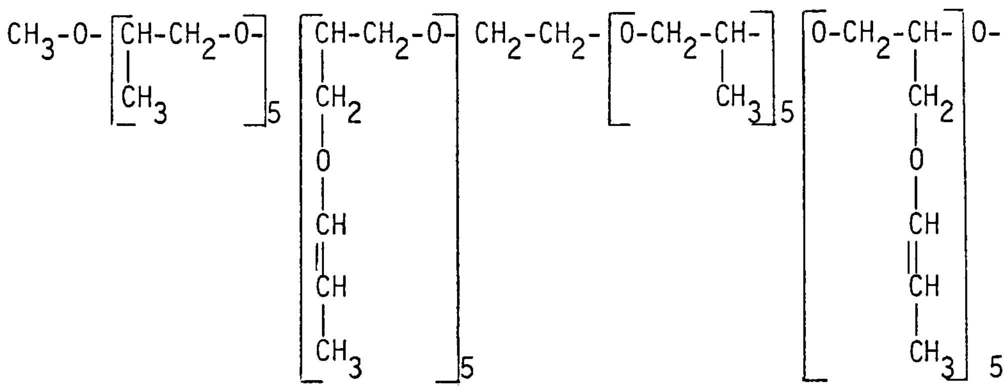

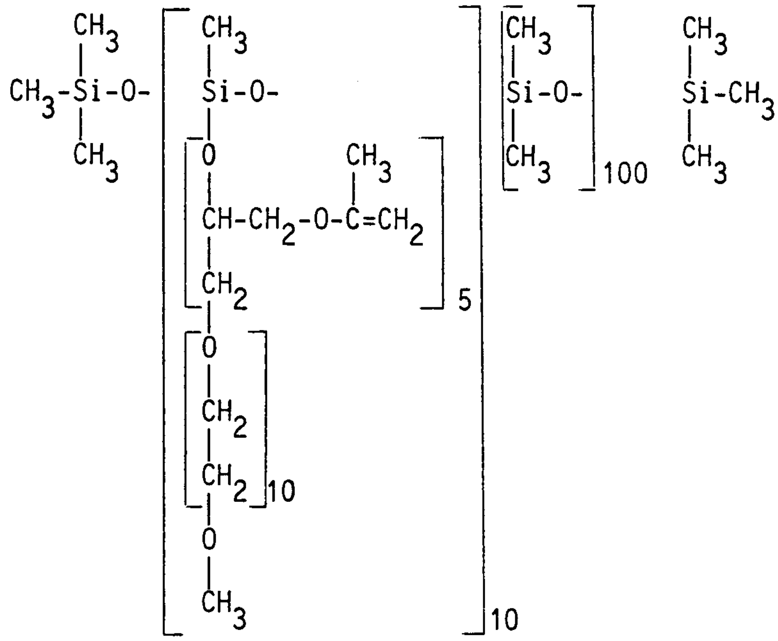

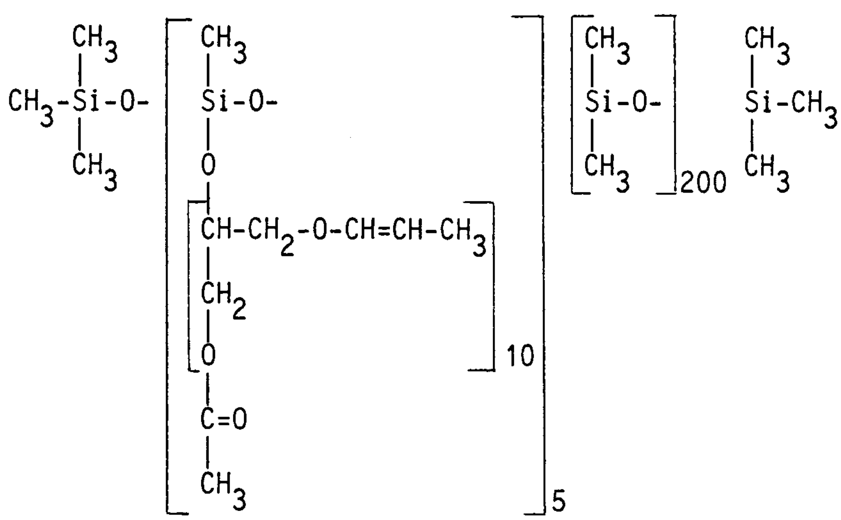

Ein weiterer Gegenstand der Erfindung besteht in dem Verfahren zur Herstellung der erfindungsgemäßen modifizierten Organopolysiloxane, welches dadurch gekennzeichnet ist, daß man einen Polyoxyalkylenether der allgemeinen Formel

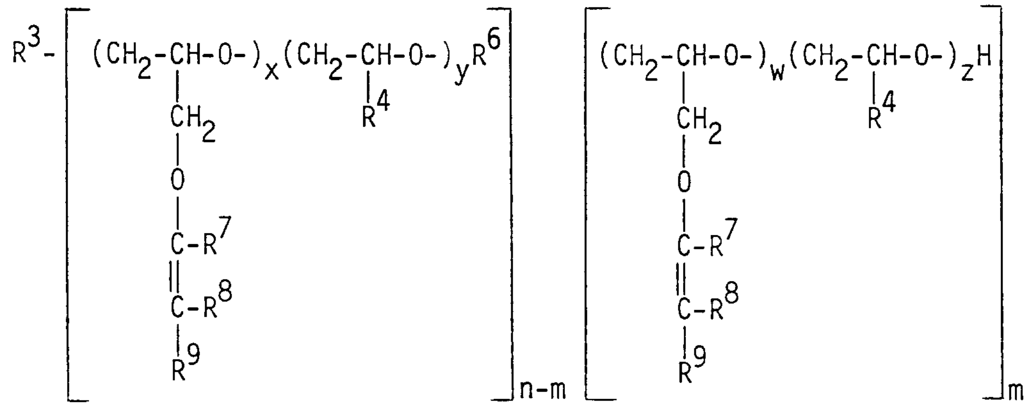

wobei

$R^3$, $R^4$, $R^5$, $R^6$, $R^7$, $R^8$, $R^9$, n, m, x, y, w, z die bereits angegebene Bedeutung bzw. Werte haben, mit einem Organopolysiloxan der allgemeinen durchschnittlichen Formel

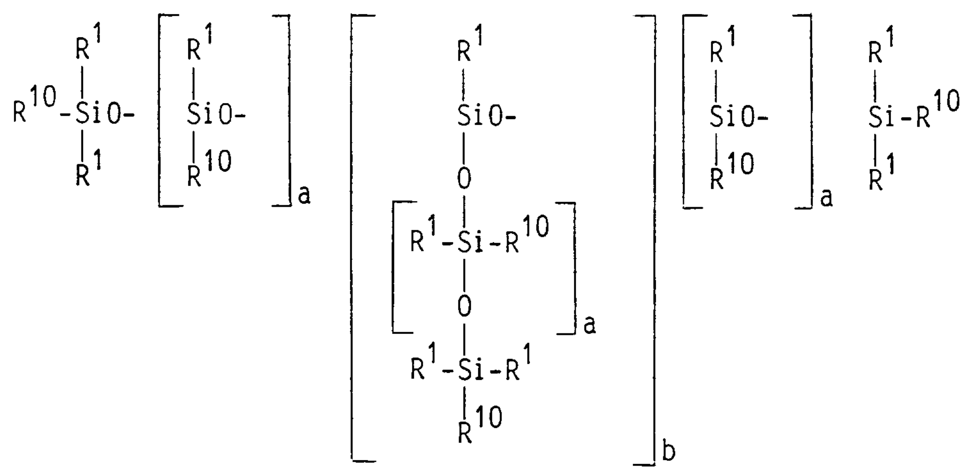

wobei

$R^1$, a und b die bereits angegebene Bedeutung bzw. Werte haben und die Reste

$R^{10}$ gleich oder verschieden sind und Alkylreste mit 1 bis 20 Kohlenstoffatomen, Arylreste, Aralkylreste oder reaktive Reste, die mit -COH-Gruppen unter Bildung einer SiOC-Gruppe reagieren,

mit der Maßgabe, daß im durchschnittlichen Molekül mindestens ein Rest $R^{10}$ ein reaktiver Rest ist,

in an sich bekannter Weise, gegebenenfalls in Gegenwart eines Lösungsmittels bei Temperaturen von 25 bis 170 °C umsetzt.

$R^{10}$ entspricht, wenn er Alkylreste mit 1 bis 20 Kohlenstoffatomen, Arylreste oder Aralkylreste bedeutet, insoweit der Gruppe $R^2$. Im durchschnittlichen Molekül muß jedoch mindestens 1 Rest $R^{10}$ eine reaktive Gruppe sein. Vorzugsweise sind im durchschnittlichen Molekül 1 bis 30, insbesondere 2 bis 15 Reste $R^{10}$ reaktive Gruppen. Reaktive Gruppen sind solche, die mit einer -COH-Gruppe unter Ausbildung einer -SiOC-Gruppe reagieren.

Bevorzugte, an Silicium gebundene reaktive Gruppen sind -OH, $-OR^{11}$, -Cl, -H oder

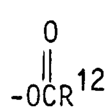-Gruppen,

wobei $R^{11}$ und $R^{12}$ jeweils Alkylreste mit 1 bis 4 Kohlenstoffatomen sind.

Die Umsetzung erfolgt vorzugsweise in Gegenwart eines Katalysators, wie Zinn- oder Titanester oder Alkalifluorid oder in Gegenwart eines Säureacceptors, z.B. eines Amins. Man arbeitet in an sich bekannter Weise meist in Gegenwart eines Lösungsmittels und in einem Temperaturbereich von 25 bis 170 °C, insbesondere 50 bis 150 °C. Geeignete Lösungsmittel sind aromatische Kohlenwasserstoffe, wie Toluol oder Hexan und Diglykoldimethylether.

Ein weiterer Gegenstand der Erfindung besteht in der Verwendung der erfindungsgemäßen modifizierten Organopolysiloxane als vorzugsweise photochemisch härtbare Polysiloxane in Vergußmassen, als abhäsive Beschichtungsmittel für flächige Träger oder als modifizierendes Additiv in radikalisch, kationisch oder durch UV- oder Elektronenstrahlen härtbare Verbindungen.

Die Aushärtung der erfindungsgemäßen Verbindungen erfolgt vorzugsweise durch UV-Strahlen in Gegenwart von Katalysatoren, wie salzartigen Diaryliodonium- oder Triarylsulfoniumverbindungen oder nicht-salzartigen Verbindungen, wie Ketosulfonen. Beispiele solcher Verbindungen sind

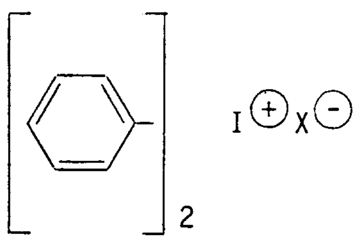 ; 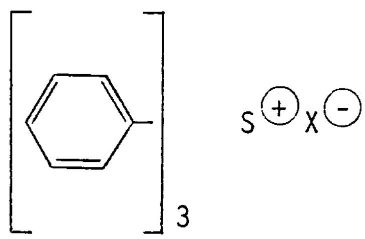

$X^{\ominus} = PF_6^{\ominus}$ ; $BF_4^{\ominus}$ ; $SbF_6^{\ominus}$

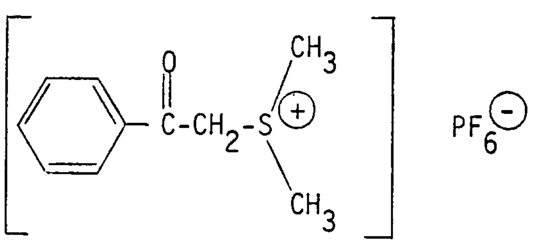 ; 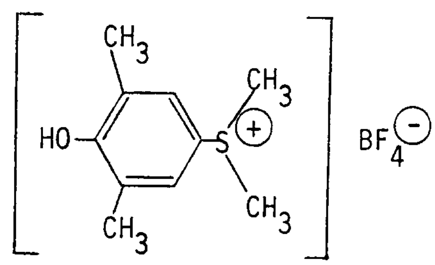

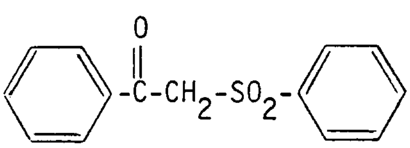 ; 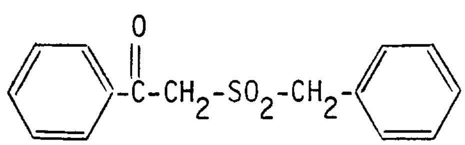

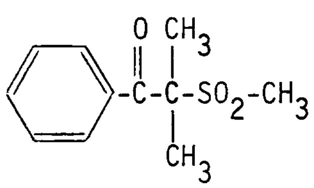 ; 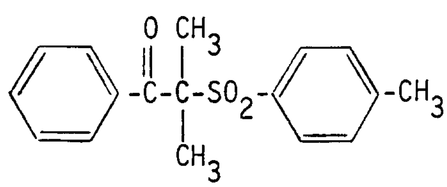

Die erfindungsgemäßen Verbindungen härten in kürzester Zeit (Bruchteile von Sekunden bis zu einigen Sekunden) zu klebfreien, flexiblen oder harten Produkten aus. Gegenüber den bekannten Verbindungen des

Standes der Technik haben sie den Vorteil der Anordnung einer praktisch beliebigen Anzahl von - gegebenenfalls substituierten - Vinylresten längs der Kette des polymeren Moleküls. Hierdurch kann die Aushärtungsgeschwindigkeit und die Vernetzungsdichte den sich aus der jeweiligen Verwendung ergebenden Anforderungen angepaßt werden.

Bei der Verwendung können die Verbindungen mit üblichen Zusatzstoffen, wie Modifizierungsmitteln, Pigmenten, Füllstoffen, Flammschutzmitteln und dergleichen, vermischt werden.

Die härtbaren Zusammensetzungen können auf solche Substrate wie Metall, Gummi, Kunststoff, geformte Teile oder Filme, Papier, Holz, Glasgewebe, Zement, Keramik usw. aufgebracht werden.

Einige der Anwendungen, in denen die härtbaren Zusammensetzungen der vorliegenden Erfindung Verwendung finden können, sind z.B. Schutz-, dekorative und isolierende Beschichtungen, Massen zum Einbetten, Druckfarbton, Abdichtungsmittel, Klebstoffe, Photoresistlacke, Drahtisolierung, Textilbeschichtungen, Schichtstoffe, imprägnierte Bänder, Druckplatten usw.

In den folgenden Beispielen werden die bevorzugten Herstellungsverfahren noch weiter erläutert und die Eigenschaften der erfindungsgemäßen Verbindungen durch anwendungstechnische Versuche gezeigt.

Beispiel 1

In einem Rührbehälter werden 730 g (5 Mol) einer Verbindung, die nach dem $^1$H-NMR die Formel

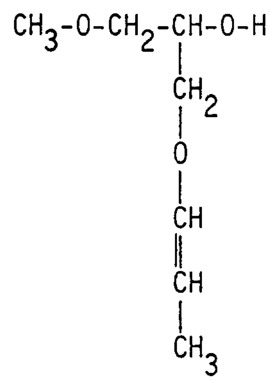

besitzt, mit 27 g Kaliumfluorid (1 Gew.-%) vorgelegt und während 2 Stunden bei 120 °C 1942 g (1 Mol) eines Siloxans der durchschnittlichen Formel

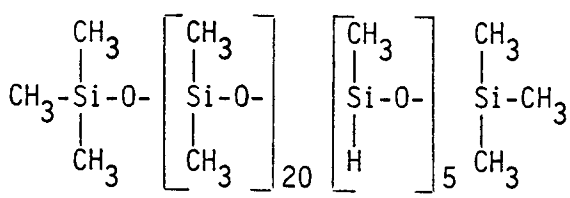

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 2529 g (95 % der Theorie) eines leicht gelblichen mittelviskosen Produktes erhalten, das nach dem $^1$H-NMR die durchschnittliche Formel

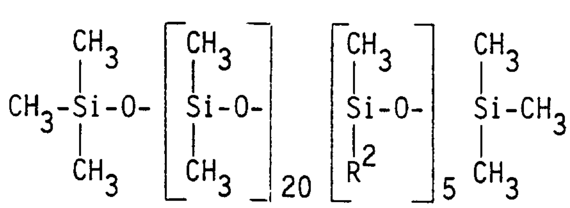

mit

$R^2$ = 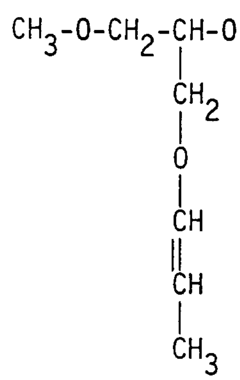

besitzt.

Beispiel 2

In einem Rührbehälter werden 586 g (0,5 Mol) einer Verbindung, die nach dem ¹H-NMR die durchschnittliche Formel

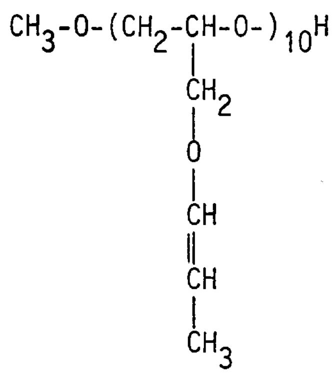

besitzt, mit 21 g Kaliumfluorid (1 Gew.-%) vorgelegt und während 2 Stunden bei 120 °C 1526 g (0,1 Mol) eines Siloxans der durchschnittlichen Formel

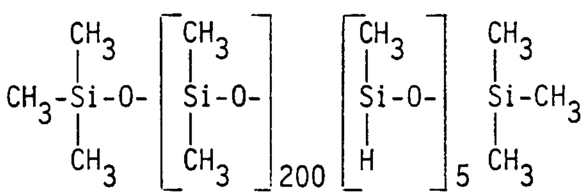

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 1900 g (90 % der Theorie) eines leicht gelblichen mittelviskosen Produktes erhalten, das nach dem ¹H-NMR die durchschnittliche Formel

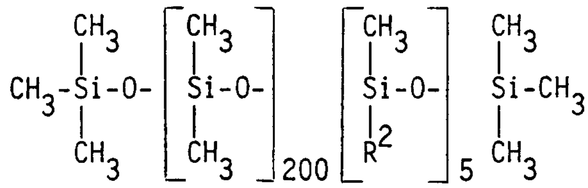

mit

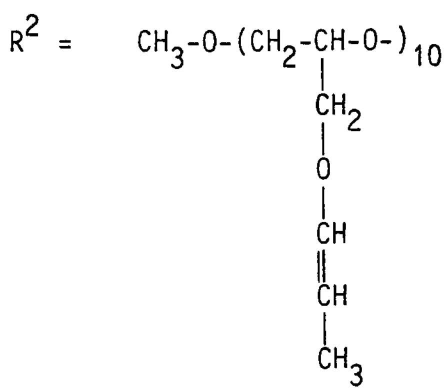

besitzt.

Beispiel 3

In einem Rührbehälter werden 1592 g (0,3 Mol) einer Verbindung, die nach dem $^1$H-NMR die durchschnittliche Formel

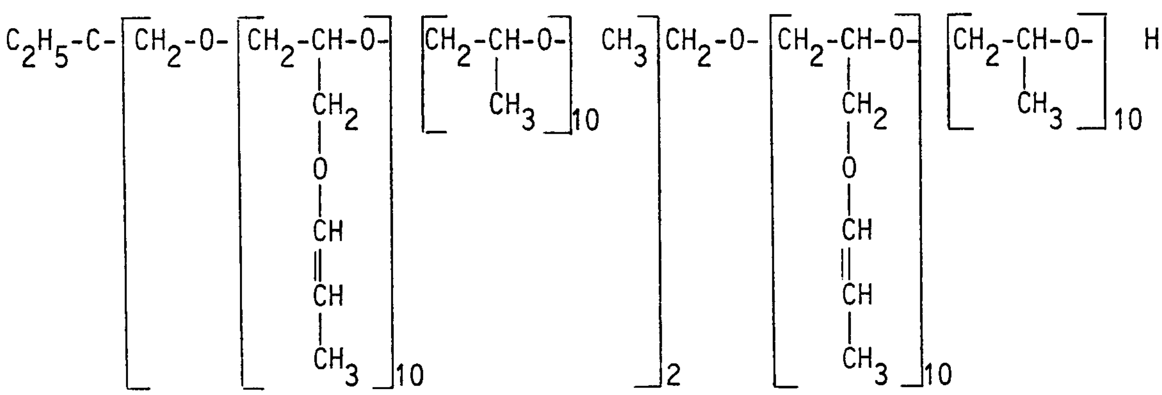

besitzt, mit 38 g Kaliumfluorid (1 Gew.-%) vorgelegt und während 2 Stunden bei 120 °C 2254 g (0,1 Mol) eines Siloxans der durchschnittlichen Formel

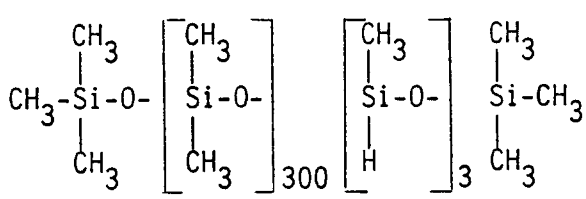

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 3500 g (91 % der Theorie) eines leicht gelblichen viskosen Produktes erhalten, das nach dem $^1$H-NMR die durchschnittliche Formel

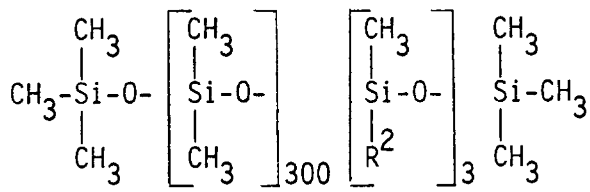

mit

$R^2$ =

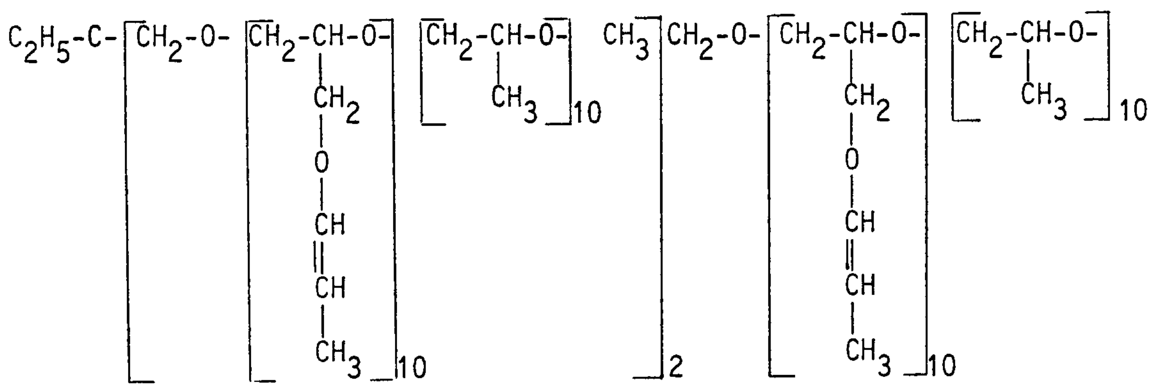

besitzt.

Beispiel 4

In einem Rührbehälter werden 188 g (1 Mol) einer Verbindung, die nach dem $^1$H-NMR die Formel

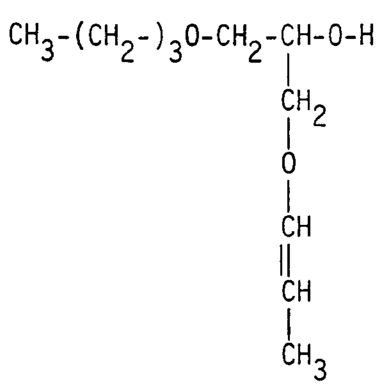

besitzt, mit 101 g (1 Mol) Triethylamin und 500 g Toluol vorgelegt und während 2 Stunden bei 120 °C 851 g (0,1 Mol) eines Siloxans der durchschnittlichen Formel

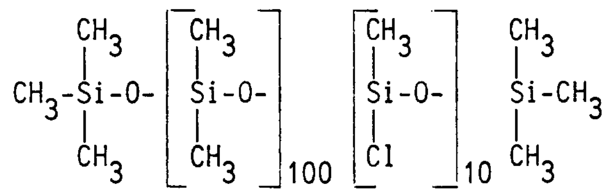

zugetropft. Das Reaktionsgemisch wird bei 100 °C 5 Stunden gerührt. Anschließend wird filtriert und unter vermindertem Druck bis 100 °C destilliert. Es werden 852 g (85 % der Theorie) eines leicht gelblichen mittelviskosen Produktes erhalten, das nach dem $^1$H-NMR die durchschnittliche Formel

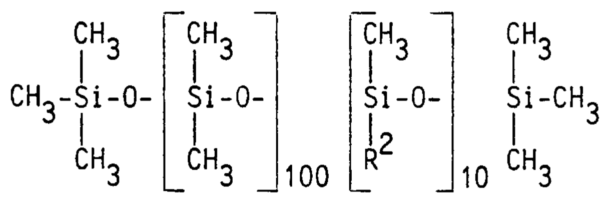

mit

$R^2$ = 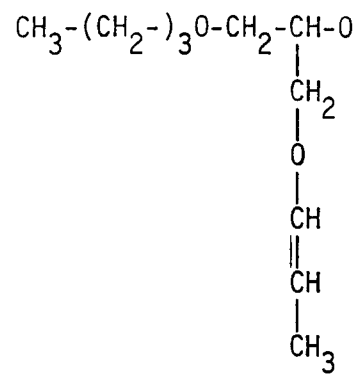

besitzt.

Beispiel 5

In einem Rührbehälter werden 1234 g (0,5 Mol) einer Verbindung, die nach dem $^1$H-NMR die durchschnittliche Formel

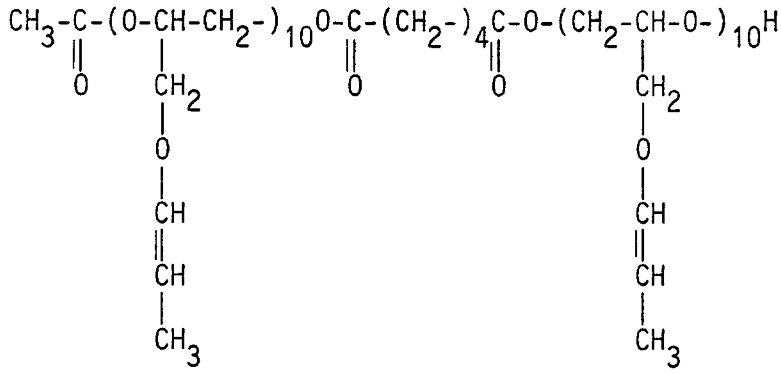

besitzt, mit 27 g Kaliumfluorid (1 Gew.-%) vorgelegt und während 2 Stunden bei 120 °C 1526 g (0,1 Mol) eines Siloxans der durchschnittlichen Formel

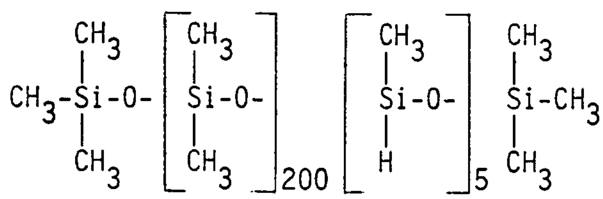

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 2483 g (90 % der Theorie) eines leicht gelblichen mittelviskosen Produktes erhalten, das nach dem $^1$H-NMR die durchschnittliche Formel

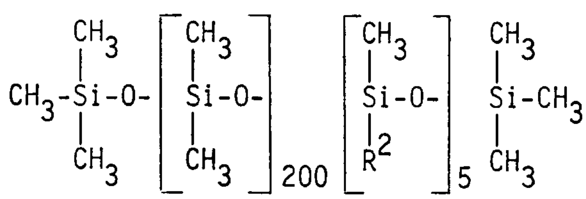

mit

$R^2$ =

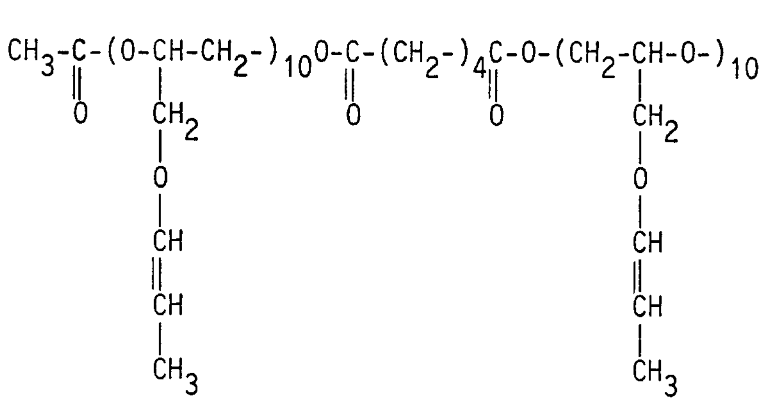

besitzt.

Beispiel 6

In einem Rührbehälter werden 1548 g (0,1 Mol) eines Siloxans der durchschnittlichen Formel

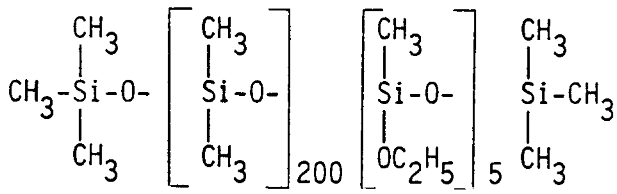

mit 11 g Butyltitanat (0,5 Gew.-%) vorgelegt und bei 100 °C 649,5 g (0,5 Mol) einer Verbindung, die nach dem $^1$H-NMR die durchschnittliche Formel

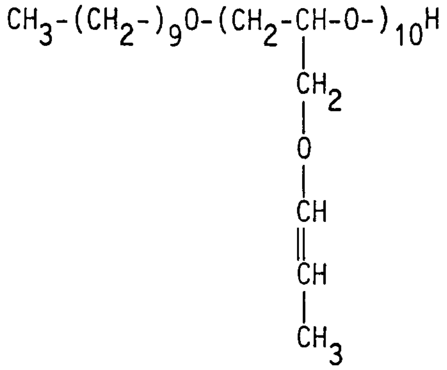

besitzt, zugetropft. Das Reaktionsgemisch wird auf Rückflußtemperatur geheizt und solange Ethanol abdestilliert, bis der Rückfluß nachläßt. Das Produkt wird unter vermindertem Druck bis 100 °C destilliert. Es werden 2022 g (93 % der Theorie) eines leicht gelblichen mittelviskosen Produktes erhalten, das nach dem $^1$H-NMR die durchschnittliche Formel

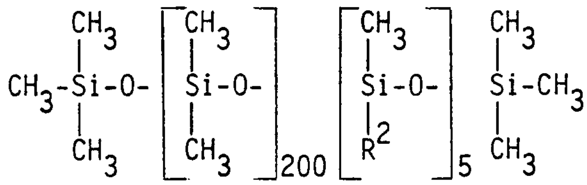

mit

$R^2$ =

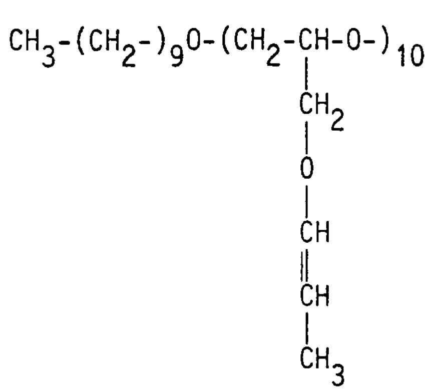

besitzt.

Beispiel 7

In einem Rührbehälter werden 1178 g (0,5 Mol) einer Verbindung, die nach dem $^1$H-NMR die durchschnittliche Formel

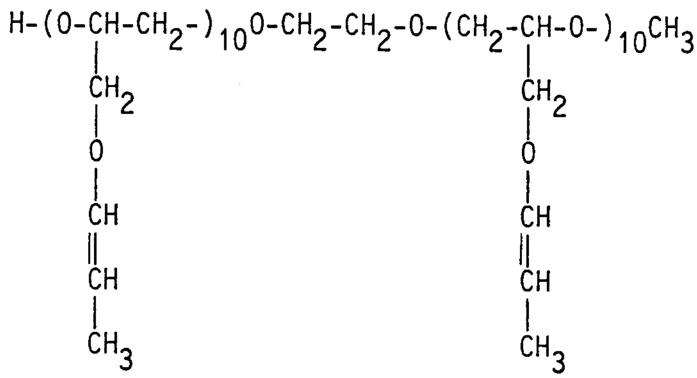

besitzt, mit 23 g Kaliumfluorid (1 Gew.-%) vorgelegt und während 2 Stunden bei 120 °C 1156 g (0,1 Mol) eines Siloxans der durchschnittlichen Formel

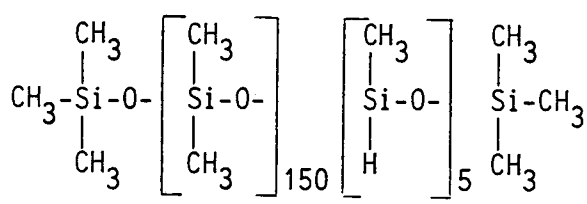

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 2100 g (90 % der Theorie) eines leicht gelblichen mittelviskosen Produktes erhalten, das nach dem $^1$H-NMR die durchschnittliche Formel

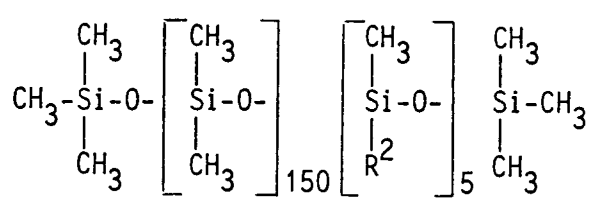

mit

$R^2$ =

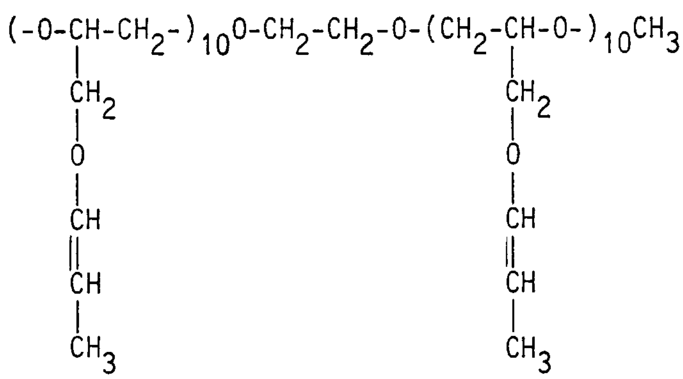

besitzt.

Beispiel 8

In einem Rührbehälter werden 470,4 g (0,7 Mol) einer Verbindung, die nach dem $^1$H-NMR die durchschnittliche Formel

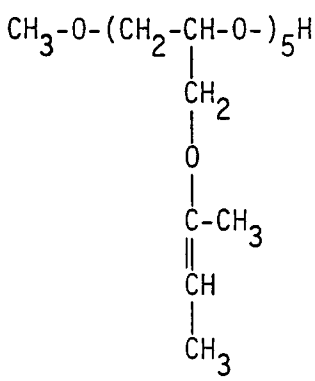

besitzt, mit 23 g Kaliumfluorid (1 Gew.-%) vorgelegt und während 2 Stunden bei 120 °C 1854 g (0,1 Mol) eines Siloxans der durchschnittlichen Formel

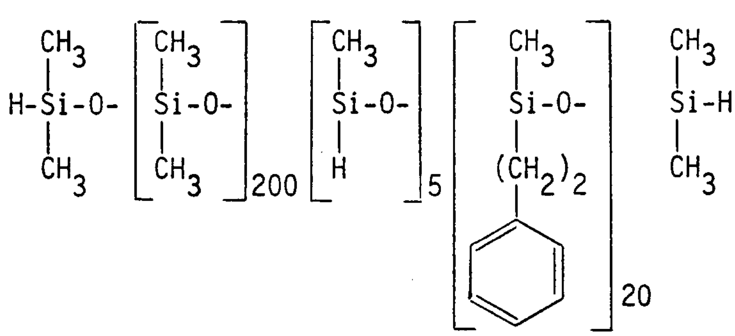

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 2090 g (90 % der Theorie) eines leicht gelblichen mittelviskosen Produktes erhalten, das nach dem $^1$H-NMR die durchschnittliche Formel

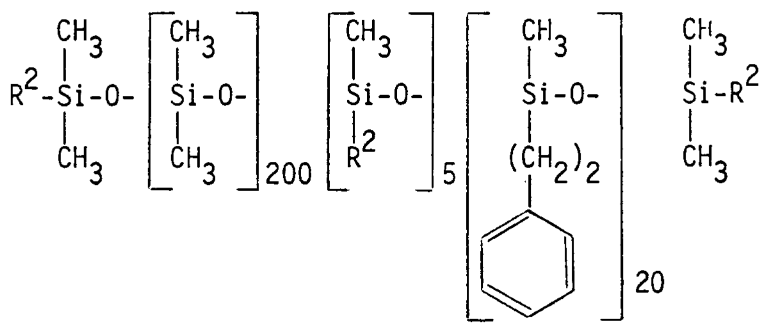

mit

$R^2 =$ 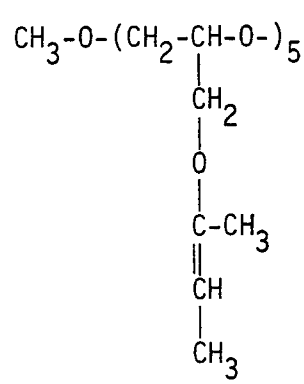

besitzt.

Beispiel 9

In einem Rührbehälter werden 547 g (0,5 Mol) einer Verbindung, die nach dem $^1$H-NMR die durchschnittliche Formel

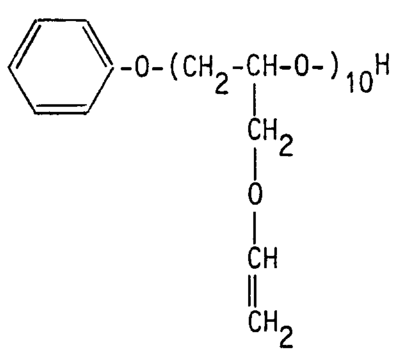

besitzt, mit 22 g Kaliumfluorid (1 Gew.-%) vorgelegt und während 2 Stunden bei 120 °C 1700 g (0,1 Mol) eines Siloxans der durchschnittlichen Formel

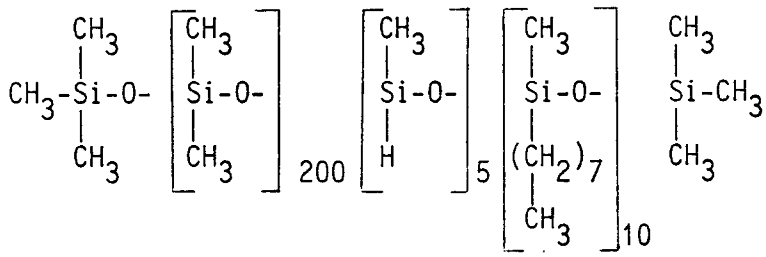

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 2135 g (95 % der Theorie) eines leicht gelblichen mittelviskosen Produktes erhalten, das nach dem $^1$H-NMR die durchschnittliche Formel

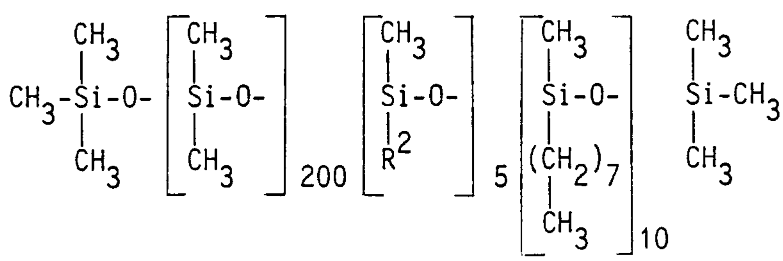

mit

$R^2$ =

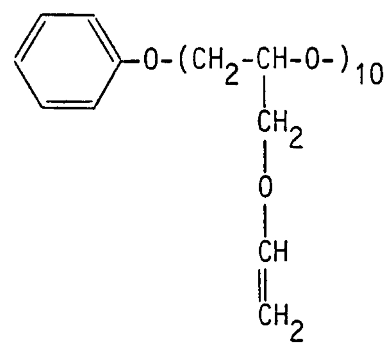

besitzt.

Beispiel 10

In einem Rührbehälter werden 2064 g (2 Mol) einer Verbindung, die nach dem $^1$H-NMR die durchschnittliche Formel

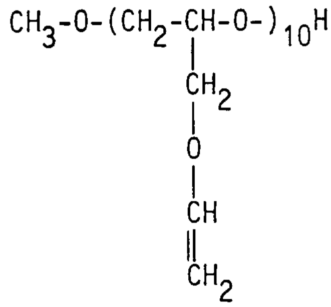

besitzt, mit 52 g Kaliumfluorid (1 Gew.-%) vorgelegt und während 2 Stunden bei 120 °C 3126 g (0,1 Mol) eines Siloxans der durchschnittlichen Formel

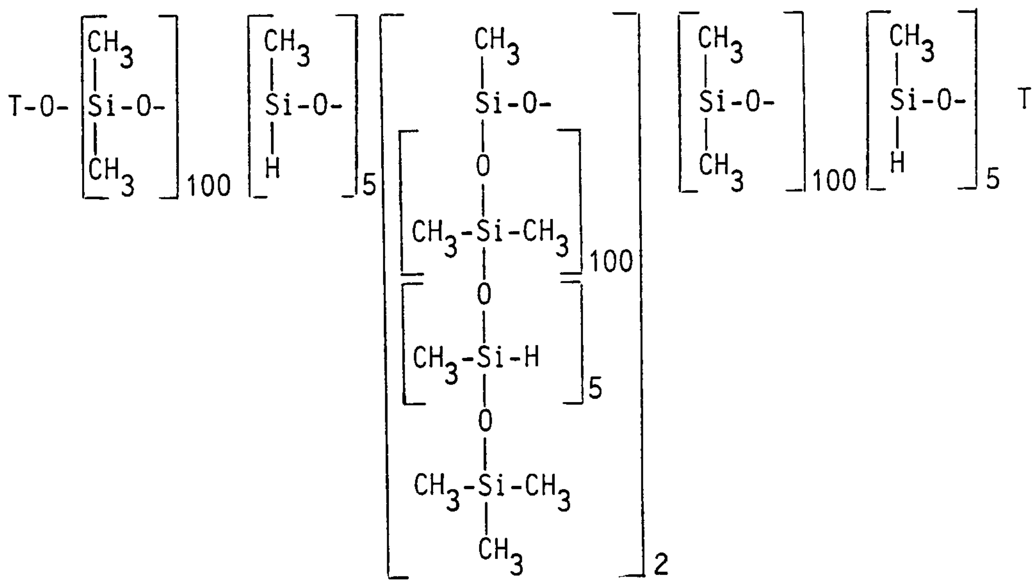

$T = (CH_3)_3Si-$

zugetropft. Das Reaktionsgemisch wird bei 100 °C solange gerührt, bis mit einer Lösung von 5 % Natriumbutylat in Butanol kein Wasserstoff mehr freigesetzt wird. Das Produkt wird unter vermindertem Druck bis 100 °C destilliert. Es werden 4512 g (87 % der Theorie) eines leicht gelblichen viskosen Produktes erhalten, das nach dem $^1$H-NMR die durchschnittliche Formel

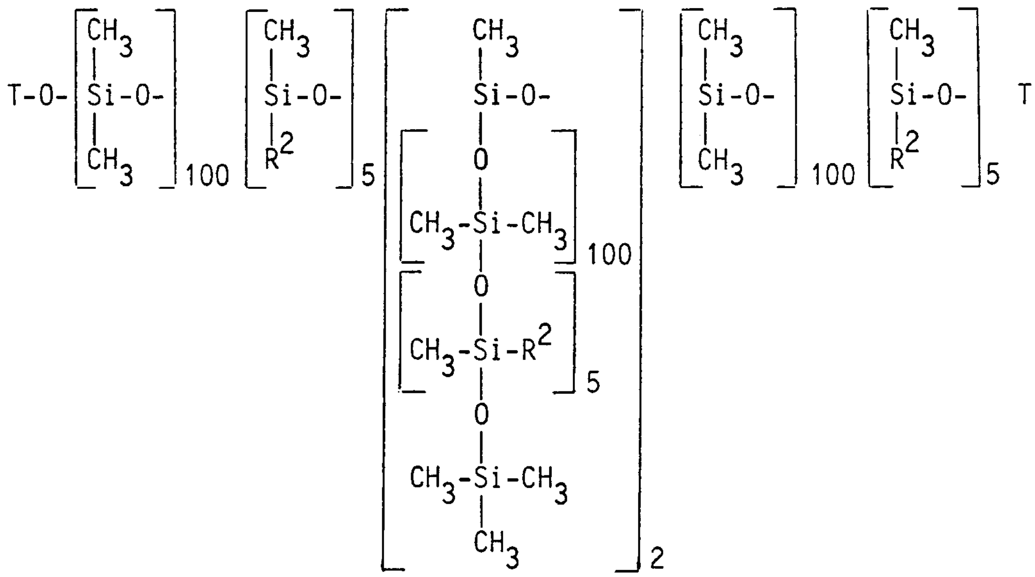

$T = (CH_3)_3Si-$

mit

$R^2 =$ 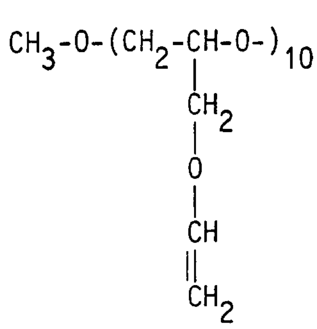

besitzt.

Anwendungstechnische Prüfung

Zur Überprüfung der anwendungstechnischen Eigenschaften der erfindungsgemäß modifizierten Polysiloxane werden die Produkte der Beispiele 1 bis 10 mit 2 Gew.-% Bis(dodecylphenyl)-iodoniumhexafluoroantimonat gut gemischt und auf unterschiedliche flächige Träger (orientierte Polypropylenfolie, satiniertes Papier) aufgetragen. Die Aushärtung erfolgt mittels einer UV-Lampe der Firma Fusion Systems Corporation, Rockville, MD, USA, Modell I 300 B, bei einer Bahngeschwindigkeit von 25 m/Min., im Abstand von 53 mm in normaler Umgebungsluft. Die Auftragsmenge beträgt in jedem Falle ca. 1,1 g/m$^2$.

Für die Vergleichsversuche werden verschiedene, 30 mm breite Klebebänder verwendet, und zwar mit Acrylatklebern beschichtete Klebebänder, die im Handel unter der Bezeichnung Tesa ® 154 und Tesa ® 970 erhältlich sind.

Zur Messung der Abhäsivität werden diese Klebebänder auf den Untergrund aufgewalzt und anschließend bei 70 °C gelagert. Nach 24 Stunden wird die Kraft gemessen, die benötigt wird, um das jeweilige Klebeband in einem Schälwinkel von 180 ° vom Untergrund abzuziehen. Diese Kraft wird als Trennkraft bezeichnet. Außerdem erfolgt eine Prüfung der Adhäsion der modifizierten Polysiloxane durch kräftiges Reiben mit dem Daumen. Bei mangelnder Haftung bilden sich gummiartige Krümel (sogenannter "Rub off"-Test).

In einer weiteren Testreihe wird der Photoinitiator Bis(dodecylphenyl)iodoniumhexafluoroantimonat durch 2 Gew.-% 2-Methyl-2-(4-methyl-phenylsulfonyl)-4-dodecylphenylpropiophenon ersetzt. Die anwendungstechnische Prüfung erfolgt wie in der ersten Testreihe. Die Werte sind in Klammern angegeben.

Tabelle

| modifiziertes Siloxan nach Beispiel | satiniertes Papier Tesa® 154 Trennkraft [N] | satiniertes Papier Tesa® 970 Trennkraft [N] | satiniertes Papier Rub off | orientierte Polypropylenfolie Tesa® 154 Trennkraft [N] | orientierte Polypropylenfolie Tesa® 970 Trennkraft [N] | orientierte Polypropylenfolie Rub off |
|---|---|---|---|---|---|---|
| 1 | 6 (5) | 10 (9) | n | 5 (5) | 10 (9) | n |
| 2 | 0,6 (0,6) | 1,3 (1,4) | n | 0,5 (0,5) | 1,3 (1,4) | n |
| 3 | 5 (4) | 8 (8) | n | 4 (4) | 8 (8) | n |
| 4 | 1 (1) | 3 (3) | j | 1 (1) | 3 (3) | j |
| 5 | 2 (2) | 3 (3) | n | 2 (2) | 2,5 (3) | n |
| 6 | 0,5 (0,5) | 1,5 (2) | n | 0,5 (0,5) | 1,3 (2) | n |
| 7 | 3 (2) | 4 (5) | n | 3 (3) | 5 (5) | n |
| 8 | 6 (6) | 10 (9) | n | 6 (5) | 9 (9) | n |
| 9 | 4 (5) | 8 (8) | n | 4 (4) | 8 (8) | n |
| 10 | 0,5 (0,5) | 2 (2) | n | 0,5 (0,5) | 1,5 (2) | n |

## Patentansprüche

**1.** Härtbare Organopolysiloxane mit über SiOC-Gruppen gebundenen Oxyalkylenethergruppen der allgemeinen durchschnittlichen Formel

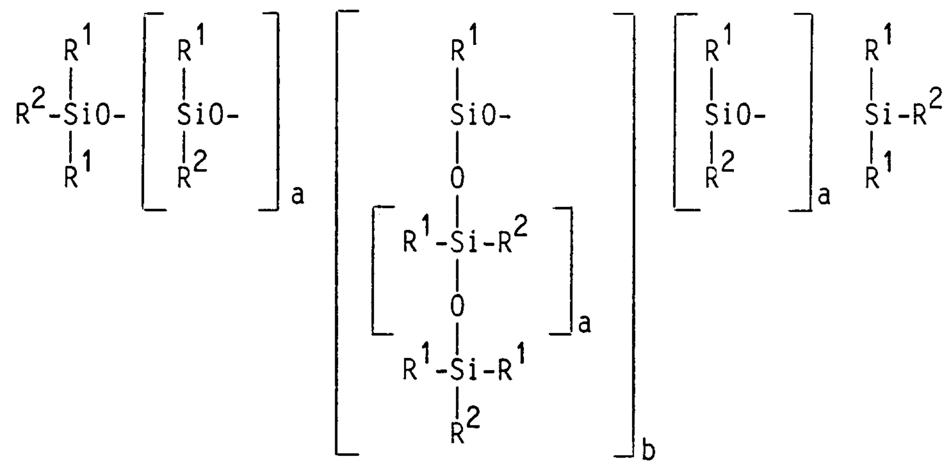

wobei die Reste

| | |
|---|---|
| $R^1$ | gleich oder verschieden sind und Alkylreste mit 1 bis 4 Kohlenstoffatomen oder Phenylreste mit der Maßgabe bedeuten, daß mindestens 90 % der Reste $R^1$ Methylreste sind, |
| $R^2$ | gleich oder verschieden sind und Alkylreste mit 1 bis 20 Kohlenstoffatomen, Arylreste, Aralkylreste oder Oxyalkylenetherreste der allgemeinen Formel |

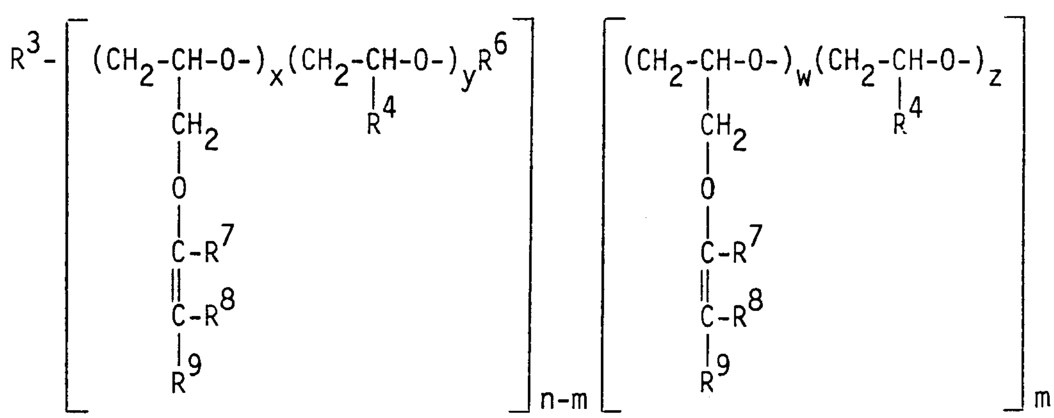

| | |
|---|---|
| | bedeuten, in der |
| $R^3$ | ein n-wertiger Rest einer zur Anlagerung von Oxiranen befähigten Verbindung $(R^3)H_n$ mit n aktiven Wasserstoffatomen, |
| $R^4$ | ein Wasserstoff-, Kohlenwasserstoff- oder $R^5OCH_2$-Rest, |
| $R^5$ | ein Kohlenwasserstoff- oder Acylrest ist, |
| $R^6$ | ein Kohlenwasserstoff- oder Acylrest ist, |
| $R^7$, $R^8$, $R^9$ | jeweils Wasserstoff- oder Kohlenwasserstoffreste mit 1 bis 8 Kohlenstoffatomen sind oder wobei $R^7$ und $R^8$ oder $R^8$ und $R^9$ gemeinsam Bestandteil eines cyclischen, nichtaromatischen Kohlenwasserstoffrestes mit 5 oder 6 Kohlenstoffatomen sind, |
| n | eine Zahl von 1 bis 6 ist, |
| m | einen durchschnittlichen Wert von 1 bis 2 hat, wobei m nicht größer als n sein darf, |
| x, y, w, z | jeweils einen durchschnittlichen Wert von 0 bis 100 haben, wobei $w + z \geq 1$ sein muß, |
| | mit der Maßgabe, daß im durchschnittlichen Molekül mindestens eine Gruppe |

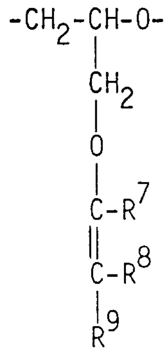

vorhanden sein muß,

a einen durchschnittlichen Wert von 1 bis 1000,

b einen durchschnittlichen Wert von 0 bis 10 hat.

2. Polysiloxane nach Anspruch 1, dadurch gekennzeichnet, daß im durchschnittlichen Polysiloxanmolekül 1 bis 30 Oxyalkylenetherreste enthalten sind.

3. Polysiloxane nach Anspruch 1 oder 2, dadurch gekennzeichnet, daß a einen Wert von 5 bis 200 und b einen Wert von 0 bis 2 hat.

4. Polysiloxane nach Anspruch 3, dadurch gekennzeichnet, daß b einen Wert von 0 hat.

5. Polysiloxane nach einem oder mehreren der vorhergehenden Ansprüche, dadurch gekennzeichnet, daß mindestens einer der Reste $R^7$, $R^8$ und $R^9$ ein Alkylrest ist.

6. Polysiloxane nach Anspruch 5, dadurch gekennzeichnet, daß der Rest $R^8$ und/oder der Rest $R^9$ ein Alkylrest und der Rest $R^7$ ein Wasserstoffrest ist.

7. Polysiloxane nach Anspruch 5, dadurch gekennzeichnet, daß der Rest $R^9$ ein Methylrest ist und die Reste $R^7$ und $R^8$ Wasserstoffreste sind.

8. Polysiloxane nach einem oder mehreren der Ansprüche 1 bis 4, dadurch gekennzeichnet, daß $R^7$ und $R^8$ gemeinsam Bestandteil eines cyclischen, nichtaromatischen Kohlenwasserstoffrestes mit 5 oder 6 Kohlenstoffatomen sind und $R^8$ ein Wasserstoffrest ist.

9. Polysiloxane nach einem oder mehreren der vorhergehenden Ansprüche, dadurch gekennzeichnet, daß $1 < x + y + w + z < 150$ ist.

10. Polysiloxane nach einem oder mehreren der vorhergehenden Ansprüche, dadurch gekennzeichnet, daß $x + w$ einen Wert von 1 bis 25 hat.

11. Polysiloxane nach Anspruch 10, dadurch gekennzeichnet, daß x einen Wert von 2 bis 4 hat.

12. Polysiloxane nach einem oder mehreren der vorhergehenden Ansprüche, dadurch gekennzeichnet, daß $m = 1$ ist.

13. Polysiloxane nach einem oder mehreren der vorhergehenden Ansprüche, dadurch gekennzeichnet, daß die Verbindung $(R^3)H_n$, von der der Rest $R^3$ abgeleitet ist, Wasser, Ammoniak, ein ein- oder mehrwertiger Alkohol, ein ein- oder mehrwertiges Phenol, eine ein- oder mehrwertige Carbonsäure, eine Hydroxycarbonsäure oder ein ein- oder mehrwertiges Amin ist.

14. Polysiloxane nach einem oder mehreren der vorhergehenden Ansprüche, dadurch gekennzeichnet, daß die Verbindung $(R^3)H_n$, von der der Rest $R^3$ abgeleitet ist, ein einwertiger gesättigter aliphatischer Alkohol mit 1 bis 13 Kohlenstoffatomen ist.

**15.** Polysiloxane nach einem oder mehreren der vorhergehenden Ansprüche, dadurch gekennzeichnet, daß die Verbindung $(R^3)H_n$, von der der Rest $R^3$ abgeleitet ist, ein einwertiger ungesättigter Alkohol mit 3 bis 13 Kohlenstoffatomen ist.

**16.** Polysiloxane nach einem oder mehreren der vorhergehenden Ansprüche, dadurch gekennzeichnet, daß die Verbindung $(R^3)H_n$, von der der Rest $R^3$ abgeleitet ist, ein zwei- bis sechswertiger aliphatischer Alkohol mit 2 bis 6 Kohlenstoffatomen ist.

**17.** Polysiloxane nach einem oder mehreren der vorhergehenden Ansprüche, dadurch gekennzeichnet, daß $R^4$ ein Wasserstoff-, Methyl-, Ethyl-, $HOCH_2$- oder $CH_3OCH_2$-Rest ist.

**18.** Verfahren zur Herstellung der Polysiloxane nach Anspruch 1, dadurch gekennzeichnet, daß man Polyoxyalkylenether der allgemeinen Formel

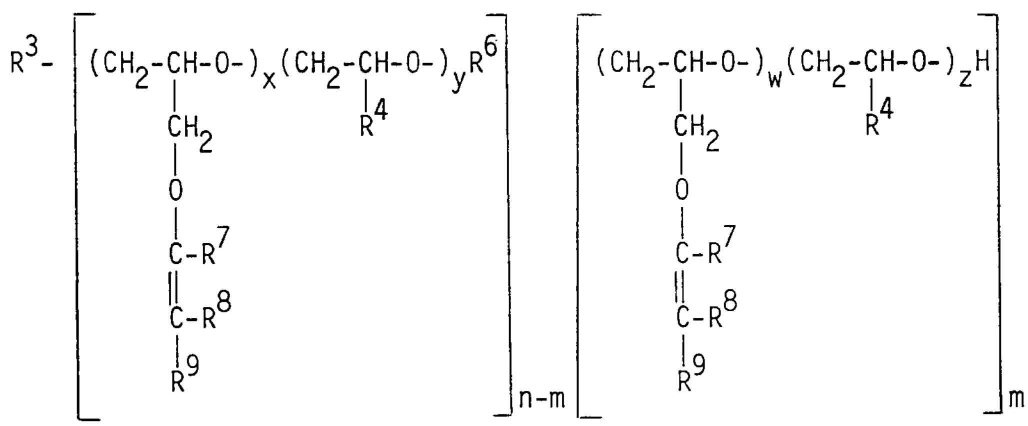

wobei
$R^3$, $R^4$, $R^5$, $R^6$, $R^7$, $R^8$, $R^9$, n, m, x, y, w, z die bereits angegebene Bedeutung bzw. Werte haben,
mit einem Organopolysiloxan der allgemeinen durchschnittlichen Formel

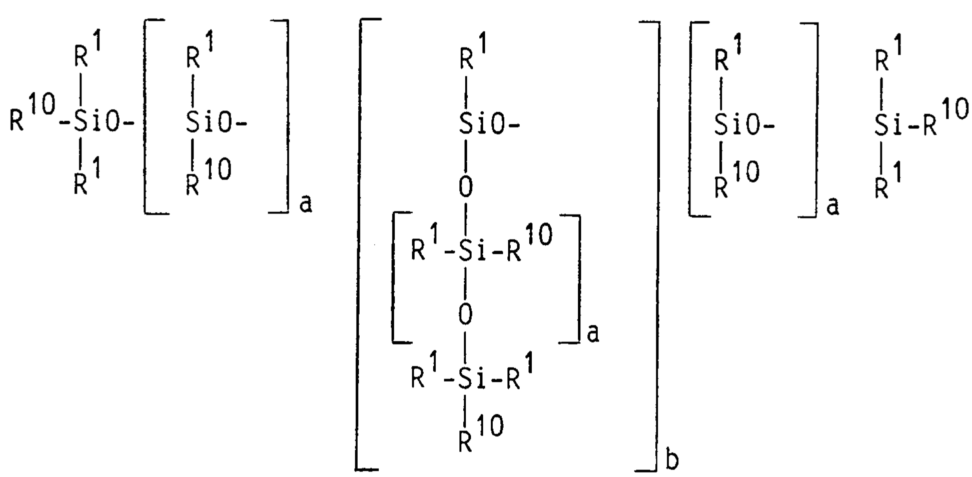

wobei

| | |
|---|---|
| $R^1$, a und b | die bereits angegebene Bedeutung bzw. Werte haben und die Reste |
| $R^{10}$ | gleich oder verschieden sind und Alkylreste mit 1 bis 20 Kohlenstoffatomen, Arylreste, Aralkylreste oder reaktive Reste, die mit -COH-Gruppen unter Bildung einer SiOC-Gruppe reagieren, mit der Maßgabe, daß im durchschnittlichen Molekül mindestens ein Rest $R^{10}$ ein reaktiver Rest ist, |

in an sich bekannter Weise, gegebenenfalls in Gegenwart eines Lösungsmittels bei Temperaturen von 25 bis 170 °C umsetzt.

**19.** Verfahren nach Anspruch 18, dadurch gekennzeichnet, daß man Polysiloxane verwendet, bei denen die reaktive Gruppe $R^{10}$ die Gruppe -OH, $-OR^{11}$, -Cl, -H oder

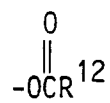

ist, in der $R^{11}$ und $R^{12}$ jeweils Alkylreste mit 1 bis 4 Kohlenstoffatomen sind.

**20.** Verwendung der härtbaren Polysiloxane nach einem oder mehreren der Ansprüche 1 bis 17 als vorzugsweise photochemisch härtbare Polysiloxane in Vergußmassen, als abhäsive Beschichtungsmittel für flächige Träger oder als modifizierendes Additiv in radikalisch, kationisch oder durch UV- oder Elektronenstrahlen härtbare Verbindungen.

## Claims

**1.** Curable organopolysiloxanes with oxyalkylene ether groups bonded via SiOC groups, of the general average formula

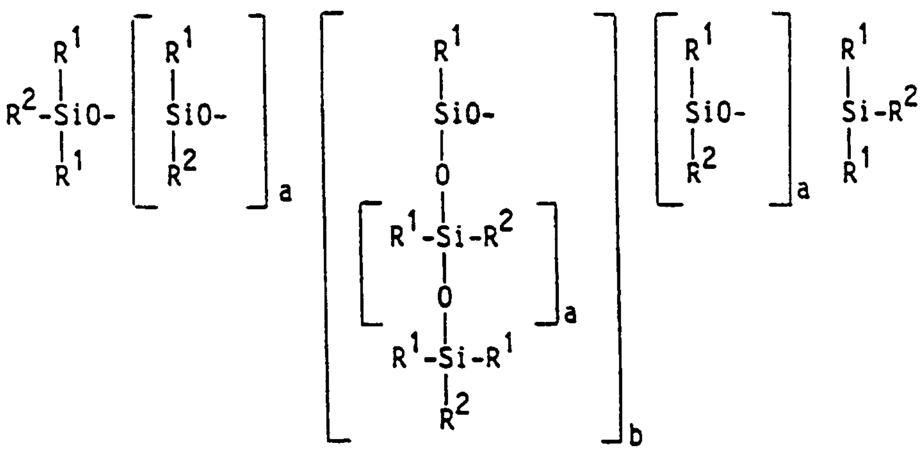

wherein the radicals

$R^1$ are identical or different and denote alkyl radicals having 1 to 4 carbon atoms or phenyl radicals, with the proviso that at least 90% of the radicals $R^1$ are methyl radicals,

$R^2$ are identical or different and denote alkyl radicals having 1 to 20 carbon atoms, aryl radicals, aralkyl radicals or oxyalkylene ether radicals of the general formula

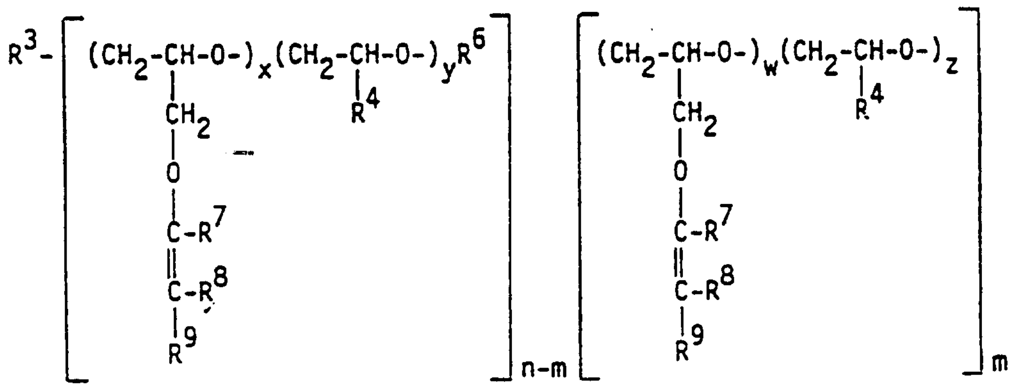

in which

| | |
|---|---|
| $R^3$ | is an n-valent radical of a compound $(R^3)H_n$ with n active hydrogen atoms which is capable of adding on oxiranes, |
| $R^4$ | is a hydrogen, hydrocarbon or $R^5OCH_2$ radical, |
| $R^5$ | is a hydrocarbon or acyl radical, |
| $R^6$ | is a hydrocarbon or acyl radical, |
| $R^7$, $R^8$ and $R^9$ | are each hydrogen or hydrocarbon radicals having 1 to 8 carbon atoms, or wherein $R^7$ and $R^8$ or $R^8$ and $R^9$ together are a constituent of a cyclic, non-aromatic hydrocarbon radical having 5 or 6 carbon atoms, |
| n | is a number from 1 to 6, |
| m | has an average value of 1 to 2, and m may not be greater than n, |
| x, y, w and z | in each case have an average value of 0 to 100, and w + z must be ≧ 1, with the proviso that at least one group of the formula |

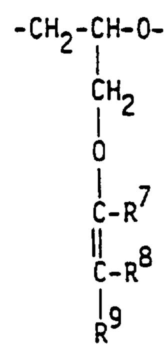

must be present in the average molecule,

| | |
|---|---|
| a | has an average value of 1 to 1000 and |
| b | has an average value of 0 to 10. |

**2.** Polysiloxanes according to Claim 1, characterized in that the average polysiloxane molecule contains 1 to 30 oxyalkylene ether radicals.

**3.** Polysiloxanes according to Claim 1 or 2, characterized in that a has a value of 5 to 200 and b has a value of 0 to 2.

**4.** Polysiloxanes according to Claim 3, characterized in that b has a value of 0.

**5.** Polysiloxanes according to one or more of the preceding claims, characterized in that at least one of the radicals $R^7$, $R^8$ and $R^9$ is an alkyl radical.

**6.** Polysiloxanes according to Claim 5, characterized in that the radical $R^8$ and/or the radical $R^9$ is an alkyl radical and the radical $R^7$ is a hydrogen radical.

**7.** Polysiloxanes according to Claim 5, characterized in that the radical $R^9$ is a methyl radical and the radicals $R^7$ and $R^8$ are hydrogen radicals.

**8.** Polysiloxanes according to one or more of Claims 1 to 4, characterized in that $R^7$ and $R^8$ together are a constituent of a cyclic, non-aromatic hydrocarbon radical having 5 or 6 carbon atoms and $R^8$ is a hydrogen radical.

**9.** Polysiloxanes according to one or more of the preceding claims, characterized in that $1 < x + y + w + z < 150$.

**10.** Polysiloxanes according to one or more of the preceding claims, characterized in that $x + w$ has a value of 1 to 25.

**11.** Polysiloxanes according to Claim 10, characterized in that x has a value of 2 to 4.

**12.** Polysiloxanes according to one or more of the preceding claims, characterized in that m is 1.

**13.** Polysiloxanes according to one or more of the preceding claims, characterized in that the compound $(R^3)H_n$ from which the radical $R^3$ is derived is water, ammonia, a mono- or polyhydric alcohol, a mono- or polyhydric phenol, a mono- or polybasic carboxylic acid, a hydroxycarboxylic acid or a mono- or polyvalent amine.

**14.** Polysiloxanes according to one or more of the preceding claims, characterized in that the compound $(R^3)H_n$ from which the radical $R^3$ is derived is a monohydric saturated aliphatic alcohol having 1 to 13 carbon atoms.

**15.** Polysiloxanes according to one or more of the preceding claims, characterized in that the compound $(R^3)H_n$ from which the radical $R^3$ is derived is a monohydric unsaturated alcohol having 3 to 13 carbon atoms.

**16.** Polysiloxanes according to one or more of the preceding claims, characterized in that the compound $(R^3)H_n$ from which the radical $R^3$ is derived is a di- to hexahydric aliphatic alcohol having 2 to 6 carbon atoms.

**17.** Polysiloxanes according to one or more of the preceding claims, characterized in that $R^4$ is a hydrogen, methyl, ethyl, $HOCH_2$ or $CH_3OCH_2$ radical.

**18.** Process for the preparation of the polysiloxanes according to Claim 1, characterized in that polyoxyalkylene ethers of the general formula

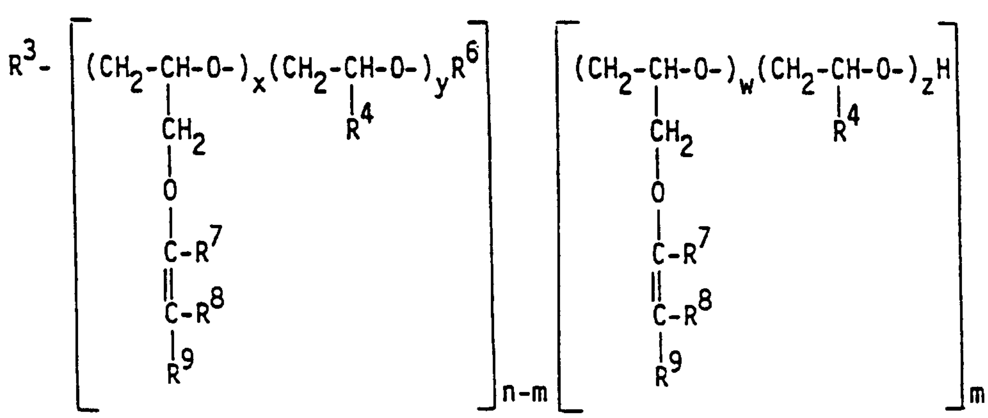

wherein

$R^3$, $R^4$, $R^5$, $R^6$, $R^7$, $R^8$, $R^9$, n, m, x, y, w and z have the meaning or values already given,

are reacted with an organopolysiloxane of the general average formula

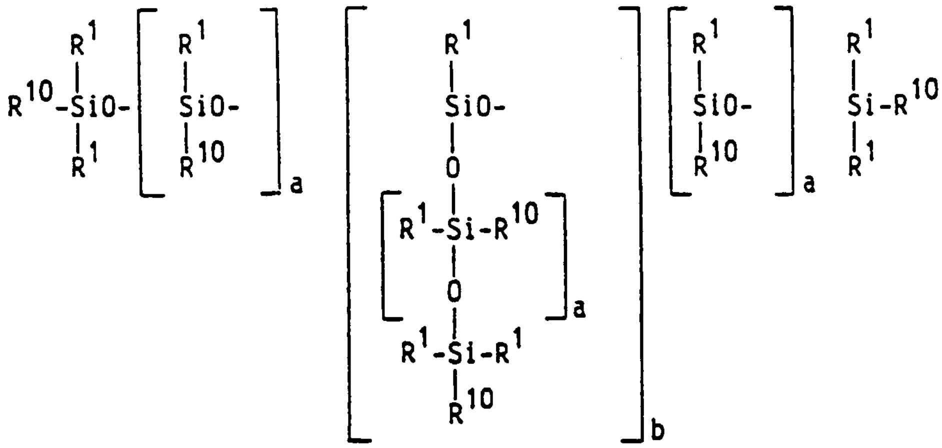

wherein

$R^1$, a and b have the meaning or values already given and the radicals

$R^{10}$ are identical or different and are alkyl radicals having 1 to 20 carbon atoms, aryl radicals, aralkyl radicals or reactive radicals which react with -COH groups to form an SiOC group,

with the proviso that at least one radical $R^{10}$ in the average molecule is a reactive radical,

in a manner which is known per se, if appropriate in the presence of a solvent, at temperatures of 25 to 170 °C.

**19.** Process according to Claim 18, characterized in that polysiloxanes in which the reactive group $R^{10}$ is the group -OH, $-OR^{11}$ -Cl, -H or

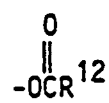

in which $R^{11}$ and $R^{12}$ are each alkyl radicals having 1 to 4 carbon atoms are used.

**20.** Use of the curable polysiloxanes according to one or more of Claims 1 to 17 as preferably photochemically curable polysiloxanes in casting compositions, as abhesive coating agents for flat carriers or as a modifying additive in compounds which can be cured by free radicals, cationically or by UV radiation or electron beams.

**Revendications**

**1.** Organopolysiloxanes durcissables contenant des groupes d'éther d'oxyalkylène liés par des groupes SiOC, répondant à la formule générale moyenne :

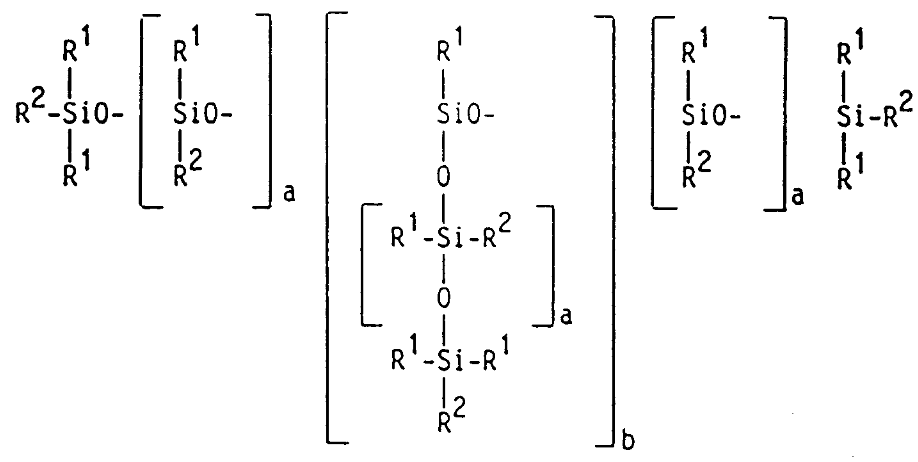

où les restes

$R^1$ sont identiques ou différents les uns des autres et signifient des restes alkyle ayant de 1 à 4 atomes de carbone ou des restes phényle, à la condition qu'au moins 90 % des restes $R^1$ soient des restes méthyle,

$R^2$ sont identiques ou différents les uns des autres et signifient des restes alkyle ayant de 1 à 20 atomes de carbone, des restes aryle, des restes aralkyle ou des restes d'éther d'oxyalkylène répondant à la formule générale :

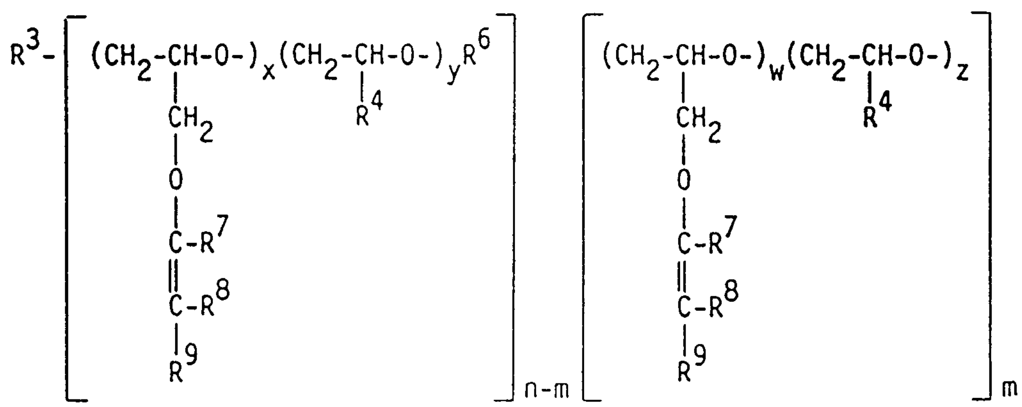

où

$R^3$ est un reste de valence n d'un composé $(R^3)H_n$ comportant n atomes d'hydrogène actif et capable d'être ajouté par addition sur des oxirannes,

$R^4$ est un reste d'hydrogène ou d'hydrocarbure ou le reste $R^5OCH_2$,

$R^5$ est un reste d'hydrocarbure ou un reste acyle,

$R^6$ est un reste d'hydrocarbure ou un reste acyle,

$R^7$, $R^8$ et $R^9$ signifient chacun un reste d'hydrogène ou un reste d'hydrocarbure ayant de 1 à 8 atomes de carbone, ou $R^7$ et $R^8$ ou $R^8$ et $R^9$ pris ensemble forment un constituant d'un reste d'hydrocarbure cyclique non-aromatique ayant 5 ou 6 atomes de carbone,

n est un nombre valant de 1 à 6,

m a une valeur moyenne de 1 à 2, mais m ne peut pas être supérieur à n,

x, y, w et z ont chacun une valeur moyenne de 0 à 100, mais w + z doit être supérieur ou égal à 1,

à la condition qu'au moins un groupe

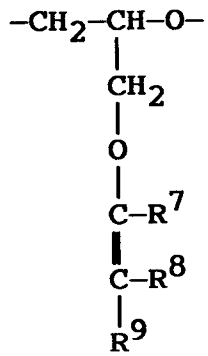

soit présent dans la molécule moyenne,

| | |
|---|---|
| a | a une valeur moyenne de 1 à 1 000, |
| b | a une valeur moyenne de 0 à 10. |

**2.** Polysiloxanes selon la revendication 1, caractérisés en ce que la molécule moyenne du polysiloxane contient de 1 à 30 restes d'éther d'oxyalkylène.

**3.** Polysiloxanes selon la revendication 1 ou 2, caractérisés en ce que a vaut de 5 à 2 000, et b vaut de 0 à 2.

**4.** Polysiloxanes selon la revendication 3, caractérisés en ce que b vaut 0.

**5.** Polysiloxanes selon une ou plusieurs des revendications précédentes, caractérisés en qu'au moins un des restes $R^7$, $R^8$ et $R^9$ est un reste alkyle.

**6.** Polysiloxanes selon la revendication 5, caractérisés en ce que le reste $R^8$ et/ou le reste $R^9$ est un reste alkyle, et le reste $R^7$ est un reste d'hydrogène.

**7.** Polysiloxanes selon la revendication 5, caractérisés en ce que le reste $R^9$ est un reste méthyle, et les restes $R^7$ et $R^8$ sont des restes d'hydrogène.

**8.** Polysiloxanes selon une ou plusieurs des revendications 1 à 4, caractérisés en ce que $R^7$ et $R^8$ pris ensemble forment un constituant d'un reste d'hydrocarbure cylique non-aromatique ayant 5 ou 6 atomes de carbone, et $R^8$ est un reste d'hydrogène.

**9.** Polysiloxanes selon une ou plusieurs des revendications précédentes, caractérisés en ce que :

$$1 < x + y + w + z < 150.$$

**10.** Polysiloxanes selon une ou plusieurs des revendications précédentes, caractérisés en ce que $x + w$ vaut de 1 à 25.

**11.** Polysiloxanes selon la revendication 10, caractérisés en ce que x vaut de 2 à 4.

**12.** Polysiloxanes selon une ou plusieurs des revendications précédentes, caractérisés en ce que $m = 1$.

**13.** Polysiloxanes selon une ou plusieurs des revendications précédentes, caractérisés en ce que le composé $(R^3)H_n$, d'où le reste $R^3$ est dérivé, est l'eau, l'ammoniac, un alcool mono- ou polyvalent, un phénol mono- ou polyvalent, un acide carboxylique mono- ou polyvalent, un acide hydrocarboxylique ou une amine mono- ou polyvalente.

**14.** Polysiloxanes selon une ou plusieurs des revendications précédentes, caractérisés en ce que le composé $(R^3)H_n$, d'où le reste $R^3$ est dérivé, est un alcool aliphatique monovalent saturé ayant de 1 à 13 atomes de carbone.

**15.** Polysiloxanes selon une ou plusieurs des revendications précédentes, caractérisés en ce que le composé $(R^3)H_n$, d'où le reste $R^3$ est dérivé, est un alcool monovalent insaturé ayant de 3 à 13 atomes de carbone.

**16.** Polysiloxanes selon une ou plusieurs des revendications précédentes, caractérisés en ce que le composé $(R^3)H_n$, d'où le reste $R^3$ est dérivé, est un alcool aliphatique bivalent à hexavalent ayant de 2 à 6 atomes de carbone.

**17.** Polysiloxanes selon une ou plusieurs des revendications précédentes, caractérisés en ce que $R^4$ est un reste d'hydrogène, un reste méthyle, éthyle, $HOCH_2$ ou $CH_3OCH_2$.

**18.** Procédé de préparation des polysiloxanes selon la revendication 1, caractérisé en ce qu'on fait réagir des éthers de polyoxyalkylène de formule générale :

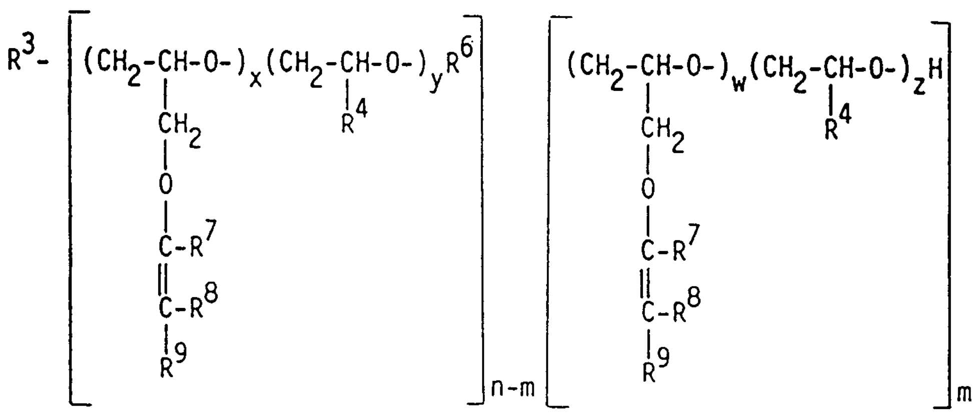

où

$R^3$, $R^4$, $R^5$, $R^6$, $R^7$, $R^8$, $R^9$, n, m, x, y, w et z ont les significations et les valeurs déjà indiquées, avec un organopolysiloxane répondant à la formule générale moyenne :

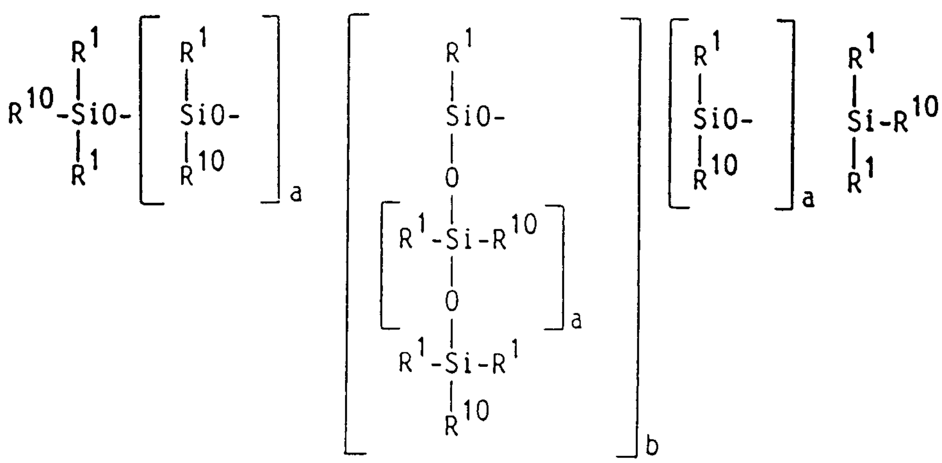

où $R^1$, a et b ont les significations et les valeurs déjà indiquées,
et les restes $R^{10}$, qui sont identiques ou différents les uns des autres, signifient des restes alkyle ayant de 1 à 20 atomes de carbone, des restes aryle, des restes aralkyle ou des restes réactifs qui réagissent avec des groupes -COH en formant un groupe SiOC,
à la condition qu'au moins un reste $R^{10}$ soit un reste réactif dans la molécule moyenne,
d'une manière connue en soi, éventuellement en présence d'un solvant, à des températures de 25 à 170 °C.

**19.** Procédé selon la revendication 18, caractérise en ce qu'on utilise des polysiloxanes dont le groupe réactif $R^{10}$ est le groupe -OH, $-OR^{11}$, -Cl, -H ou

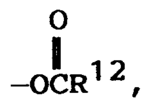

où $R^{11}$ et $R^{12}$ signifient chacun un reste alkyle ayant de 1 à 4 atomes de carbone.

**20.** Utilisation des polysiloxanes durcissables selon une ou plusieurs des revendications 1 à 17 comme des polysiloxanes durcissables de préférence photochimiquement dans des masses de scellement, comme des agents de revêtement anti-adhésif pour des substrats disposés à plat, ou comme des additifs de modification dans des composés à durcissement radicalaire, cationique ou durcissant sous l'effet de rayons ultraviolets ou d'un faisceau électronique.